# EUROPÄISCHE PATENTSCHRIFT

(11) **EP 2 857 226 B1**
(45) Veröffentlichungstag und Bekanntmachung des Hinweises auf die Patenterteilung: **03.01.2018**
(21) Anmeldenummer: 14181182.8
(22) Anmeldetag: 15.08.2014
(51) Int. Cl.: B60C 15/032, B60C 29/00

(54) **Reifenanordnung für eine Fahrradfelge**
Tyre assembly for a bicycle rim
Système de pneumatique pour une jante de véhicule

(30) Priorität: 01.10.2013 DE 202013008966 U; 23.07.2014 DE 202014006003 U
(43) Veröffentlichungstag der Anmeldung: 08.04.2015
(73) Patentinhaber: Ralf Bohle GmbH, 51580 Reichshof (DE)
(72) Erfinder: Hachmeyer, Markus, 51674 Wiehl (DE); Zuther, Oliver, 76829 Landau (DE)
(74) Vertreter: Patentanwälte Ruff, Wilhelm, Beier, Dauster & Partner mbB

(56) Entgegenhaltungen:
- EP-A1- 0 695 651
- DE-A1- 2 438 633
- US-A- 2 991 821
- US-A1- 2007 256 769

## Beschreibung

Die Erfindung betrifft eine Reifenanordnung für eine Fahrradfelge mit einem Fahrreifen mit einer Lauffläche und zwei Reifenwülsten, die im montierten Zustand an der Innenseite der Felgenhörner anliegen, und einem Innenreifen, der im montierten Zustand innerhalb des Fahrreifens angeordnet ist. Die Erfindung betrifft auch eine Felge für eine Reifenanordnung.
Aus der europäischen Patentschrift EP 2 173 572 B1 ist eine Reifenanordnung für Motorradfelgen bekannt, die einen Fahrreifen, einen Innenreifen und einen Schlauch aufweist. Der Schlauch ist zwischen dem Innenreifen und der Felge angeordnet und der Innenreifen wird mittels des Schlauchs gegen die Reifenwülste des Fahrreifens gedrückt, um diesen auf der Felge zu sichern. Wesentlich ist, dass zwischen der Außenseite des Innenreifens und der Innenseite der Reifenwülste des Fahrreifens ein Dichteingriff vorliegt, um einen Zwischenraum zwischen dem Innenreifen und dem Fahrreifen gegenüber der Felge abzudichten. Dieser Zwischenraum wird mittels eines Ventils befüllt. Ein separates Ventil ist für das Befüllen des Schlauchs vorgesehen. Vorgeschlagen wird damit eine Reifenanordnung mit zwei mittels des Innenreifens gegeneinander abgedichtete und voneinander getrennte Luftkammern, die mit unterschiedlichem Luftdruck befüllt werden können.
Aus der europäischen Patentschrift EP 2 110 268 B1 ist eine Reifenanordnung für eine Motorradfelge mit einem Fahrreifen, einem Innenreifen und einem Schlauch bekannt. Der Schlauch ist innerhalb des Innenreifens angeordnet und der Innenreifen drückt im befüllten und montierten Zustand die Reifenwülste des Fahrreifens gegen die Felge. Der Innenreifen weist Dichtlippen oder Dichtkanten auf, die auf der Außenseite des Innenreifens angeordnet sind und gegen die Innenseite des Fahrreifens im Bereich der Reifenwülste drücken. Dadurch wird eine luftdichte Verbindung zwischen dem Innenreifen und dem Fahrreifen geschaffen. Die Reifenan-ordnung stellt dadurch zwei Luftkammern bereit, die durch den Innenreifen als Trennwand voneinander getrennt und gegeneinander abgedichtet sind. Die zweite Luftkammer zwischen dem Innenreifen und dem Fahrreifen wird mittels einer Hohlnadel gefüllt, die in den Fahrreifen eingestochen wird. Das dadurch entstehende Loch wird mittels Dichtmilch abgedichtet.

Aus der gattungsgemäßen US-Offenlegungsschrift US 2007/0256769 A1 ist eine Reifenanordnung für eine Fahrradfelge bekannt, die einen Fahrreifen mit einer Lauffläche und zwei Reifenwülsten, die im montierten Zustand an der Innenseite der Felgenhörner anliegen, einen Innenreifen, der im montierten Zustand innerhalb des Fahrreifens angeordnet ist, einen Schlauch, der im montierten Zustand innerhalb des Innenreifens angeordnet ist, und Ventilmittel zum Befüllen einerseits des Schlauchs und andererseits eines Zwischenraums zwischen der Felge und dem Fahrreifen mit unterschiedlichem Luftdruck aufweist, wobei der Innenreifen im befüllten und montierten Zustand wenigstens abschnittsweise an den Reifenwülsten des Fahrreifens anliegt und diese gegen die Felge drückt. Die beschriebene Reifenanordnung ist zur Verwendung mit konventionellen Felgen vorgesehen, die nicht für schlauchlose Reifen ausgebildet und infolgedessen nicht Luftdicht sind. Um dennoch das Befüllen des Fahrreifens mit einem niedrigeren Luftdruck als den Schlauch zu gewährleisten, ist der Innenreifen so ausgebildet, dass er sich beim Befüllen des Schlauchs in einen Dichteingriff mit den Reifenwülsten des Fahrreifens bewegt. Dadurch ist die Luftkammer des Fahrreifens vollständig von der Felge abgetrennt. Um das Befüllen der Luftkammer des Fahrreifens zu ermöglichen, kann der Innenreifen mit einer Durchgangsöffnung versehen sein, die in abgedichteter Weise mit einem Schlauch in Verbindung steht, der wiederum mit einem durch die Felge gesteckten Ventil verbunden ist. Über diese Schlauchverbindung kann mittels des Ventils die durch den Innenreifen gegenüber der Felge abgedichtete Luftkammer des Fahrreifens befüllt werden.

Aus der europäischen Offenlegungsschrift EP 0 695 651 A1 ist eine Reifenanordnung für eine Fahrradfelge bekannt, die einen Fahrreifen mit einer Lauffläche und zwei Reifenwülsten, die im montierten Zustand an der Innenseite der Felgenhörner anliegen, einen Innenreifen, der im montierten Zustand innerhalb des Fahrreifens angeordnet ist, einen Schlauch, der im montierten Zustand innerhalb des Innenreifens angeordnet ist und Ventilmittel zum Befüllen einerseits des Schlauchs und andererseits eines Zwischenraums zwischen der Felge und dem Fahrreifen mit unterschiedlichem Luftdruck aufweist, wobei der Innenreifen im befüllten und montierten Zustand wenigstens abschnittsweise an den Reifenwülsten des Fahrreifens anliegt und diese gegen die Felge drückt. Schlauch und Innenreifen sind als miteinander verbundene Struktur ausgebildet und liegen konzentrisch ineinander. Um eine konventionelle, nicht für schlauchlose Reifen geeignete Felge verwenden zu können, ist eine elastische, abdichtende Auflage auf dem Felgenbett vorgesehen. Der Schlauch und der Innenreifen ermöglichen einen Luftdurchgang zwischen den Wülsten des Fahrreifens und der Außenfläche des Innenreifens. Die Reifenwülste des Fahrreifens können mit Rippen versehen sein, um einen solchen Luftdurchgang zu ermöglichen. Die beschriebene Reifenanordnung kann mit einem Zweiwegeventil befüllt werden.

Aus der US-Patentschrift US 2,991,821 A ist eine Reifenanordnung bekannt, die einerseits einen Schlauch und andererseits einen Fahrreifen aufweist. Die Reifenanordnung soll zwei Luftkammern aufweisen, einmal den Innenraum des Fahrreifens und dann den Schlauch. Zum Befüllen dieser beiden Luftkammern ist ein Zweiwegeventil vorgesehen.

Mit der Erfindung soll eine für Fahrradfelgen geeignete Reifenanordnung bereitgestellt werden, die es ermöglicht, einen Fahrreifen mit sehr geringem Luftdruck zu fahren und dennoch sicherzustellen, dass der Fahrreifen sicher auf der Felge gehalten wird.

Erfindungsgemäß ist hierzu eine Reifenanordnung für eine Fahrradfelge mit den Merkmalen von Anspruch 1 vorgesehen. Vorteilhafte Weiterbildungen der Erfindung sind in den Unteransprüchen angegeben. Gemäß der Erfindung ist die Reifenanordnung mit einem Fahrreifen mit einer Lauffläche und zwei Reifenwülsten, die im montierten Zustand an der Innenseite der Felgenhörner anliegen, einem Innenreifen, der im montierten Zustand innerhalb des Fahrreifens angeordnet ist, einem Schlauch, der im montierten Zustand innerhalb des Innenreifens angeordnet ist, Ventilmitteln zum Befüllen einerseits des Schlauchs und andererseits eines Zwischenraums zwischen der Felge und dem Fahrreifen mit unterschiedlichem Luftdruck versehen, wobei der Innenreifen im befüllten und montierten Zustand wenigstens abschnittsweise an den Reifenwülsten des Fahrreifens anliegt und diese gegen die Felge drückt, wobei ein Einlageteil vorgesehen ist, das im montierten Zustand einen Luftkanal von den Ventilmitteln zu dem Zwischenraum zwischen der Felge und dem Fahrreifen bildet, wobei das Einlageteil zwischen dem Schlauch und der Felge, zwischen dem Innenreifen und der Felge zwischen dem Schlauch und dem Innenreifen und/oder zwischen dem Innenreifen und dem Fahrreifen angeordnet ist.

Vorteilhafterweise ist der Innenreifen in seiner Wand mit einer ersten Durchgangsöffnung versehen, wobei die erste Durchgangsöffnung im montierten Zustand mit dem Zwischenraum zwischen der Felge und dem Fahrreifen in Verbindung steht und wobei ein Einlageteil vorgesehen ist, das im montierten Zustand zwischen der Felge und dem Schlauch sowie zwischen dem Schlauch und dem Innenreifen angeordnet ist und das wenigstens abschnittsweise einen Luftkanal zwischen der Felge und dem Schlauch sowie zwischen dem Schlauch und dem Innenreifen bis zur Durchgangsöffnung im Innenreifen bildet.

Der Erfindung liegt die Erkenntnis zugrunde, dass eine für Fahrradfelgen geeignete, leichtgewichtige Reifenanordnung eine luftdicht abgedichtete Felge benötigt. Wenn die luftdicht abgedichtete Felge als eine Trennwand einer Luftkammer zur Außenwelt zur Verfügung steht, ist es möglich, auf einen Dichteingriff zwischen dem Innenreifen und dem Fahrreifen zu verzichten. Der Innenreifen muss dadurch nur noch die Funktion erfüllen, ein radiales Aufgehen des Schlauchs zu verhindern und damit den Schlauch auf der Felge zu halten, um wiederum über den Innenreifen die Reifenwülste des Fahrreifens gegen die Felge zu drücken. Eine Abdichtfunktion muss der Innenreifen aber nicht erfüllen, was es ermöglicht, den Innenreifen sehr leicht auszuführen. Auch die Montage der erfindungsgemäßen Reifenanordnung wird erleichtert, da die Felge luftdicht ausgeführt bzw. abgedichtet sein muss und daher bei der Montage nicht auf einen abdichtenden Eingriff zwischen Innenreifen und Fahrreifen geachtet werden muss. Das Vorsehen eines Einlageteils in Verbindung mit einer Durchgangsöffnung im Innenreifen ermöglicht es, in konstruktiv sehr einfacher und auch sehr einfach zu montierender Art und Weise einen Luftkanal von einem Ventil in der Felge zwischen der Felge und dem Schlauch, dann zwischen dem Schlauch und dem Innenreifen bis zu der Durchgangsöffnung und damit zum Innenraum des Fahrreifens bereitzustellen. Das Einlageteil wird so ausgebildet, dass es sanft gerundete Übergänge und keine scharfen Kanten aufweist, um den Schlauch nicht zu beschädigen. Die Erfindung stellt dadurch eine Reifenanordnung bereit, die zwei mit unterschiedlichem Luftdruck zu befüllende Luftkammern bereitstellt, wobei diese beiden Luftkammern aber nicht hintereinander, sondern ineinander angeordnet sind. Speziell ist eine erste Luftkammer durch die Innenwand des Fahrreifens und den Umfang der abgedichteten Felge bereitgestellt. Innerhalb dieser Luftkammer ist der eine weitere und mit höherem Druck zu befüllende Luftkammer bildende Schlauch angeordnet. Die erfindungsgemäße Reifenanordnung kann sehr leicht ausgeführt werden. Besonders vorteilhaft ist auch, dass ein konventioneller, für schlauchlosen Betrieb geeigneter Fahrreifen verwendet werden kann. Der Innenreifen muss erfindungsgemäß ausgebildet sein. Der Schlauch kann in an und für sich konventioneller Weise ausgebildet sein, es ist allerdings dafür Sorge zu tragen, dass ein Ventil des Schlauchs luftdicht abgedichtet in der Felge angeordnet wird. Die Durchgangsöffnung wird vorteilhafterweise in den Seitenflanken des Innereifens angeordnet, so dass beim Betrieb der Reifenanordnung mit Dichtmilch weitgehend verhindert wird, dass Dichtmilch in die Durchgangsöffnung und die Rippen des Einlageteils gelangt. Die Durchgangsöffnung wird, in einer Schnittansicht des Innenreifens gesehen, wobei gedanklich auf den Schnitt des Innenreifens ein Ziffernblatt gelegt wird, idealerweise zwischen zwei Uhr und vier Uhr beziehungsweise zwischen 8 Uhr und 10 Uhr am Innenreifen angeordnet, mit anderen Worten in einem Winkelbereich zwischen plus 60 Winkelgrad und 120 Winkelgrad beziehungsweise minus 60 Winkelgrad und 120 Winkelgrad.

In Weiterbildung der Erfindung weisen die Ventilmittel zwei getrennte Ventile auf, wobei ein erstes Ventil mit dem Innenraum des Schlauchs in Verbindung steht und ein zweites Ventil an dem Einlageteil angeordnet ist und mit dem durch das Einlageteil gebildeten Luftkanal in Verbindung steht.

Die Verwendung von zwei getrennten Ventilen hat dahingehend Vorteile, dass konventionelle und dadurch kostengünstig verfügbare Ventilschäfte und Ventileinsätze verwendet werden können. Das Vorsehen des Einlageteils ermöglicht es dabei, einen Luftkanal bereitzustellen, über den der Zwischenraum zwischen der Felge und dem Fahrreifen mit vergleichsweise geringem Luftdruck befüllt werden kann. Über das erste Ventil wird der Innenraum des Schlauchs mit vergleichsweise hohem Druck befüllt, da über den Schlauch unter Zwischenfügung des Innenmantels die Reifenwülste des Fahrreifens gegen die Felge und speziell die Felgenhörner gedrückt werden, um den Fahrreifen auch in extremen Fahrsituationen sicher auf der Felge zu halten und gegebenenfalls Durchschläge zu verhindern.

In Weiterbildung der Erfindung weisen das erste und das zweite Ventil jeweils einen Dichtkonus aus elastischem Material auf, der für einen Dichteingriff mit jeweils einer Durchgangsbohrung in der Felge ausgebildet ist.

Das Vorsehen eines Dichtkonus aus elastischem Material erlaubt es in sehr einfacher Weise, die beiden Ventile luftdicht abgedichtet in der Felge anzuordnen, insbesondere in konventionellen Ventilbohrungen mit unterschiedlichem Durchmesser. Gegebenenfalls kann zusätzlich eine Dichtmilch verwendet werden. Die Verwendung eines Dichtkonus aus elastischem Material hat den Vorteil, dass die Reifenanordnung problemlos zusammengebaut und auch wieder demontiert werden kann, da der Dichtkonus an jedem der Ventile eine auch bei wiederholter Montage und Demontage zuverlässige Abdichtung zwischen Ventil und Felge bereitstellt. Ein wesentlicher Vorteil der Erfindung ist dabei, dass eine Abdichtung zwischen einem elastischen Dichtkonus des Ventils und der Felge wesentlich einfacher zu bewerkstelligen ist als der bei konventionellen Systemen erforderliche Dichteingriff zwischen dem Innenreifen und dem Fahrreifen. Aufgrund seiner Formgebung zentriert sich der Dichtkonus selbst in der Durchgangsbohrung, so dass eine verlässliche Abdichtung mit geringem Aufwand erzielt werden kann. Das Vorsehen einer Durchgangsöffnung im Innenreifen erlaubt es dabei, zusammen mit dem Einlageteil in einfacher Weise einen Luftkanal von dem zweiten Ventil zum Zwischenraum zwischen Felge und Fahrreifen zur Verfügung zu stellen, der auch durch den mit hohem Druck befüllten Schlauch nicht abgequetscht und abgedichtet wird. Dies ist von wesentlicher Bedeutung, um beim Befüllen der beiden Luftkammern der erfindungsgemäßen Reifenanordnung keine spezielle Reihenfolge einhalten zu müssen. Insbesondere kann beispielsweise die zweite Luftkammer zwischen der Felge und dem Fahrreifen auch unterwegs befüllt oder abgelassen werden, um die Fahreigenschaften der Reifenanordnung zu beeinflussen. Der Schlauch kann hingegen unverändert mit hohem Druck befüllt bleiben, um einen sicheren Sitz des Fahrreifens auf der Felge zu gewährleisten.

In Weiterbildung der Erfindung weist das zweite Ventil eine sich in Umfangsrichtung der Reifenanordnung erstreckende Fußplatte aus elastischem Material auf, die zwischen dem Einlageteil und dem Schlauch angeordnet ist.

Eine solche Fußplatte schützt den Schlauch und erlaubt die einfache Anordnung des Ventils an der Felge und insbesondere ist nicht zu befürchten, dass das Ventil in der Ventilbohrung der Felge verkantet. Auf einer in radialer Richtung gesehen außen liegenden Fläche der Fußplatte kann dann der Schlauch aufliegen. Auf einer radial innen gelegenen Oberfläche der Fußplatte liegt das Einlageteil auf. Eine Auslassbohrung des zweiten Ventils mündet dann vorteilhafterweise auf der radial innen gelegenen Seite der Fußplatte, um Luft unmittelbar in den durch das Einlageteil bereitgestellten Luftkanal leiten zu können. Von der radial innen gelegenen Seite der Fußplatte geht dann vorteilhafterweise der Dichtkonus aus, der das Ventil gegen die Felge abdichtet.

In Weiterbildung der Erfindung weisen die Ventilmittel ein Zweiwegeventil auf, wobei ein erster Auslass des Zweiwegeventils mit dem Innenraum des Schlauchs in Verbindung steht und ein zweiter Auslass des Zweiwegeventils im montierten Zustand mit dem Luftkanal zwischen der Felge und dem Schlauch sowie zwischen dem Schlauch und dem Innenreifen bis zur Durchgangsöffnung im Innenreifen in Verbindung steht.

Durch Vorsehen eines Zweiwegeventils kann Gewicht gespart werden. Auch ist es möglich, mit einer einzigen üblicherweise vorhandenen Ventilbohrung in der Felge auszukommen.

In Weiterbildung der Erfindung ist das Zweiwegeventil an dem Einlageteil angeordnet.

Auf diese Weise kann eine zweite Auslassbohrung des Zweiwegeventils unmittelbar in Verbindung mit dem durch das Einlageteil gebildeten Luftkanal in Verbindung stehen.

In Weiterbildung der Erfindung ist das Einlageteil klammerartig ausgebildet und umgreift den Schlauch abschnittsweise.

Eine klammerartige Ausbildung des Einlageteils erleichtert dessen Montage, da es in sehr einfacher Weise nur um den beispielsweise bereits teilweise aufgepumpten Schlauch gelegt werden muss. Das Einlageteil kann dadurch bei Verwendung von zwei Ventilen auch in Umfangsrichtung des Schlauchs leicht an die korrekte Position geschoben werden. Die klammerartige Ausbildung des Einlageteils erlaubt es auch, dieses sehr dünn und leicht auszuführen. Beispielsweise ist das Einlageteil als Kunststoffspritzgussteil ausgebildet. Vorteilhafterweise wird ein Kunststoff, z.B. TPU (Thermoplastisches Polyurethan), verwendet, der sich nicht mit den üblicherweise verwendeten Latexdichtmitteln verbindet. Dadurch besteht keine Gefahr, dass das Einlageteil sich zusetzt. Das Material hat vorteilhafterweise eine Shore A Härte von 75 bis 95, insbesondere 85 Shore A.

In Weiterbildung der Erfindung weist das Einlageteil eine mittig angeordnete Durchgangsbohrung zum Durchstecken eines Ventils sowie wenigstens eine von der Durchgangsbohrung ausgehende Rinne auf, die wenigstens einen Abschnitt des Luftkanals zwischen dem Schlauch und dem Innenreifen bis zur Durchgangsöffnung im Innenreifen bildet.

Durch Vorsehen einer Durchgangsbohrung im Einlageteil kann sichergestellt werden, dass das Ventil durch einfaches Einstecken in die Durchgangsbohrung korrekt platziert ist. Wenigstens eine Rinne im Einlageteil stellt dann einen Luftkanal bereit bzw. stellt sicher, dass ein Luftkanal zwischen dem Einlageteil und dem Schlauch bzw. dem Innenreifen gebildet wird, der auch bei Befüllung des Schlauchs mit sehr hohem Luftdruck nicht verlegt oder abgequetscht wird.

In Weiterbildung der Erfindung ist der Innenreifen wenigstens abschnittsweise aus luftdurchlässigem Gewebe gebildet.

Das Vorsehen eines luftdurchlässigen Gewebes führt zum Vorsehen zahlreicher Durchgangsöffnungen im Innenmantel, die dann durch das Gewebe selbst gebildet sind. Es ist ein wesentlicher Vorteil der erfindungsgemäßen Reifenanordnung, dass der Innenmantel keine Trennwand der Luftkammer im Fahrreifen bilden muss, so dass der Innenreifen sehr leicht und beispielsweise sogar luftdurchlässig ausgeführt werden kann.

In Weiterbildung der Erfindung weist der Innenreifen an seiner Außenseite und der Außenreifen an seiner Innenseite wenigstens teilweise freiliegende Karkassfäden auf, nämlich Fäden des Gewebes, die die Karkasse des Innenreifens 12 und des Fahrreifens 24 bilden, so dass eine Anlagefläche zwischen Fahrreifen und Innenreifen nicht luftdicht abdichtet.

Es ist ein wesentlicher Vorteil der Erfindung, dass keine luftdichte Abdichtung zwischen Innenreifen und Fahrreifen bereitgestellt werden muss. Die Materialgestaltung auf der Innenseite des Fahrreifens und der Außenseite des Innenreifens sind daher im Wesentlichen beliebig und beispielsweise kann der Innenreifen dadurch sehr leicht ausgeführt werden, dass seine Karkasse nur in sehr wenig elastisches Material eingebettet bzw. mit sehr wenig Material beschichtet wird. Auch die Seitenwand des Fahrreifens kann auf ihrer Innenseite durchaus freiliegende Karkassfäden aufweisen, die dann dazu führen, dass der Innenreifen und der Außenreifen sich nicht im Dichteingriff befinden, was für die erfindungsgemäße Reifenanordnung nicht wesentlich ist. Im Extremfall kann die Karkasse überhaupt nicht beschichtet oder eingebettet sein.

In Weiterbildung der Erfindung ist das Gewebe des Innenreifens mit zwei umlaufenden Reifenwülsten verbunden, insbesondere vernäht, vulkanisiert, geschweißt oder verklebt.

Die Reifenwülste des Innenreifens und deren Verbindung mit dem Gewebe des Innenreifens stellen sicher, dass der innerhalb des Innenreifens angeordnete Schlauch sich nicht in radialer Richtung zu stark aufweiten kann sondern vielmehr auf der Felge gehalten wird und dadurch unter Zwischenschaltung des Innenreifens die Reifenwülste des Fahrreifens gegen die Felge, speziell die Felgenhörner, drücken kann.

In Weiterbildung der Erfindung sind die Reifenwülste des Innenreifens mit einem Wulstkern mit sehr zugfesten und hochmodulen Fasern versehen, insbesondere Zylonfasern, Carbonfasern oder Aramidfasern, die auch bei hoher Zugkraft nur sehr wenig Dehnung aufweisen.

Das Vorsehen von sehr zugfesten Fasern in den Wulstkernen des Innenreifens stellt sicher, dass sich die Wulstkerne und damit der Innenreifen in radialer Richtung der Reifenanordnung nicht oder nur unwesentlich aufweiten. Selbst dann, wenn der Schlauch innerhalb des Innenreifens mit sehr hohem Druck befüllt wird, wird der Schlauch dadurch an der Felge gehalten. Die Verwendung von sehr zugfesten und hochmodulen Fasern ermöglicht es auch, die Wulstkerne leichter auszuführen als bei Verwendung von weniger zugfesten und hochmodulen Fasern. Vorteilhafterweise werden Multifilamentgarne eingesetzt, die einen sehr hohen Elastizitätsmodul haben. Beispielsweise werden Zylonfasern mit einem Gewicht von 3270 dtex und einem Elastizitätsmodul von 28000 N/mm² verwendet.

In Weiterbildung der Erfindung weist der Innenreifen eine Lage Kreuzgewebe und zwei Reifenwülste auf, wobei Kanten des Gewebes zum Innenraum des Innenreifens hin oder nach außen um die Reifenwülste umgeschlagen sind.

In Weiterbildung der Erfindung sind Mittel zum Abdichten zwischen Ventil und Felge und Mittel zum Abdichten von Speichenbohrungen in der Felge vorgesehen.

Beispielsweise kann bei der erfindungsgemäßen Reifenanordnung eine an und für sich konventionelle Felge verwendet werden, die mit geeigneten Mitteln luftdicht abgedichtet wird. Solche Mittel können beispielsweise Dichtmilch umfassen oder ein Felgenband, das auf das Felgenbett aufgelegt bzw. aufgeklebt wird und dadurch die Speichenbohrungen in der Felge luftdicht verschließt.

Erfindungsgemäß ist auch eine Fahrradfelge mit zwei Ventilbohrungen vorgesehen. Die Ventilbohrungen können dabei nahe beieinander um 45° oder weniger versetzt angeordnet werden, um die Montage der Reifenanordnung und des Befüllens zu erleichtern. Alternativ werden die Ventilbohrungen um 180° versetzt angeordnet, um eine Unwucht durch die Ventile möglichst zu vermeiden.

Im Rahmen der Erfindung ist eine Reifenanordnung für eine Fahrradfelge mit einem Fahrreifen mit einer Lauffläche und zwei Reifenwülsten, die in montiertem Zustand an der Innenseite der Felgenhörner anliegen, mit einem diagonal aufgebauten Innenreifen, der im montierten Zustand innerhalb des Fahrreifens auf der Felge angeordnet ist, und mit einem Schlauch, der im montierten Zustand innerhalb des Innenreifens angeordnet ist und mit Ventilmitteln zum Befüllen einerseits des Schlauchs und andererseits eines Zwischenraums zwischen dem Innenreifen und dem Fahrreifen unabhängig voneinander vorgesehen, wobei der Innenreifen im befüllten und montierten Zustand wenigstens abschnittsweise an den Reifenwülsten des Fahrreifens anliegt und diese gegen die Felge drückt.

Mittels einer solchen Anordnung mit einem Fahrreifen, einem Innenreifen und einem Schlauch kann eine leichte Montierbarkeit sowie ein sehr zuverlässiger Betrieb sichergestellt werden. Speziell sorgt der Innenreifen dafür, dass der Schlauch auch im aufgepumpten Zustand auf der Felge gehalten wird und somit die Vorspannkraft gegen die Reifenwülste des Fahrreifens erzeugen kann. Der Schlauch selbst kann als einfacher Gummi- oder Kunststoffschlauch ohne Verstärkungen und damit kostengünstig herstellbar ausgeführt sein, wenn es der Einsatzzweck erfordern sollte, können aber auch Verstärkungen vorgesehen sein.

Die Ventilmittel können ein Zweiwegeventil aufweisen, wobei ein erster Auslass des Zweiwegeventils mit dem Innenraum des Schlauchs in Verbindung steht und ein zweiter Auslass im montierten Zustand mit dem Zwischenraum zwischen dem Innenreifen und dem Fahrreifen in Verbindung steht.

Mittels eines solchen Zweiwegeventils lassen sich über ein einziges Ventil einerseits der Schlauch und andererseits der Zwischenraum zwischen dem Innenraum und dem Fahrreifen unabhängig voneinander und speziell mit völlig unterschiedlichem Druck befüllen. Speziell kann der Zwischenraum zwischen dem Innenreifen und dem Fahrreifen nur mit sehr geringem Druck aufgepumpt werden, um ein deutlich optimiertes Fahrverhalten des Fahrreifens auf einem Fahrweg zu erzielen. Der Schlauch innerhalb des Innenraums wird hingegen mit einem vergleichsweise hohen Druck befüllt, um zum einen die Reifenwülste des Fahrreifens mit hoher Kraft gegen die Felgenhörner zu pressen, um dadurch zu verhindern, dass der Fahrreifen im Betrieb von der Felge rutscht. Darüber hinaus bildet der Innenreifen einen Durchschlagschutz, verhindert also, dass der Fahrreifen beim Überfahren einer Kante gegen die Oberseite der Felge gedrückt und dadurch beschädigt und undicht wird. Das Zweiwegeventil weist ein konventionelles Rückschlagventil auf, an das eine konventionelle Luftpumpe angeschlossen werden kann. Zusätzlich kann Dichtmilch oder sonstiges flüssiges Dichtmittel innerhalb des Fahrreifens verwendet werden.

Der Innenreifen kann in seiner Wand mit einer ersten Durchgangsöffnung versehen sein, wobei die erste Durchgangsöffnung im montierten Zustand mit dem Zwischenraum zwischen dem Innenreifen und dem Fahrreifen in Verbindung steht.

Mittels einer solchen Durchgangsöffnung kann der Zwischenraum zwischen dem Innenreifen und dem Fahrreifen über die Durchgangsöffnung im Innenreifen befüllt werden. Eine Durchgangsöffnung im Innenreifen ist dabei unproblematisch, da der Innenreifen ja nicht für einen Kontakt mit einer Fahrbahnoberfläche vorgesehen ist und daher auch Erhebungen in der Wand des Innenreifens unproblematisch sind.

Die Durchgangsöffnung kann mit einem Ende eines flexiblen Schlauchs verbunden sein, wobei das andere Ende des Schlauchs mit den Ventilmitteln verbunden ist.

Auf diese Weise kann ein Ventil mit der Durchgangsöffnung in der Wand des Innenreifens verbunden werden und durch den flexiblen Schlauch werden zum einen Größenveränderungen des Innenreifens beim Aufpumpen oder Entleeren ausgeglichen und auch Bewegungen im Fahrbetrieb sind unproblematisch. Insbesondere kann ein seitlicher Versatz von Ventil und Durchgangsöffnung ausgeglichen werden.

Der Schlauch kann in seiner Wand mit einer zweiten Durchgangsöffnung versehen sein, wobei der Schlauch wenigstens im Bereich der zweiten Durchgangsöffnung mit dem Innenreifen im Bereich der ersten Durchgangsöffnung verbunden ist und wobei die erste Durchgangsöffnung mit der zweiten Durchgangsöffnung in Verbindung steht.

Auf diese Weise kann der Zwischenraum zwischen dem Innenreifen und dem Fahrreifen durch den Schlauch und den Innenreifen hindurch befüllt werden. Dadurch ergibt sich ein sehr kompakter Aufbau der erfindungsgemäßen Reifenanordnung und der Zwischenraum zwischen dem Innenreifen und dem Fahrreifen ist problemlos befüllbar.

Die erste Durchgangsöffnung und die zweite Durchgangsöffnung können mittels einer Hülse verbunden sein, wobei die Hülse einen Kanal durch die Wand des Schlauchs und die Wand des Innenreifens bildet. Wie bereits ausgeführt wurde, sind Erhebungen in der Wand des Innenreifens und/oder des Schlauchs, die durch die Hülse verursacht sein können, unproblematisch, da weder der Schlauch noch der Innenreifen für einen Kontakt mit einer Fahrbahnoberfläche vorgesehen sind. Die Hülse kann mit einem Druckminderungsventil versehen sein, so dass sich zwischen dem Innendruck des Schlauchs und dem Innenraum des Zwischenraums zwischen dem Innenreifen und dem Fahrreifen eine vordefinierte Druckdifferenz einstellt. Alternativ kann die Hülse mit einem flexiblen Schlauch verbunden sein, der dann wiederum zu einem Ventil an der Felge führt.

Der Schlauch kann zwei Enden aufweisen, wobei sich die beiden Enden des Schlauchs im montierten Zustand im Bereich der ersten Durchgangsöffnung gegenüberliegen.

Ein solcher Schlauch mit zwei Enden wird auch als "open tube" bezeichnet. Zwischen den beiden Enden des Schlauchs kann dann ein Luftkanal bereitgestellt werden, beispielsweise mittels eines flexiblen Schlauchs, der zu der Durchgangsöffnung im Innenreifen führt und über den dann der Zwischenraum zwischen dem Innenreifen und dem Fahrreifen befüllt werden kann.

Der Innenreifen und/oder der Fahrreifen können in dem Bereich, in dem im montierten Zustand der Innenreifen an der Innenseite der Reifenwülste des Fahrreifens anliegt, wenigstens einen Vorsprung und/oder wenigstens eine Vertiefung aufweisen, wobei der Vorsprung und/oder die Vertiefung beim Befüllen des Zwischenraums zwischen dem Innenraum und dem Fahrreifen einen Luftkanal über den Bereich bereitstellt, in dem im montierten Zustand der Innenreifen an der Innenseite des Fahrreifens anliegt.

Mittels wenigstens eines Vorsprungs und/oder wenigstens einer Vertiefung kann also ein Luftkanal bereitgestellt werden, der es dann ermöglicht, den Zwischenraum zwischen dem Innenreifen und dem Fahrreifen von Ventilmitteln ausgehend, die im Bereich der Felge angeordnet sind, zu befüllen. Solche Vorsprünge und/oder Vertiefungen können beispielsweise als Rippen oder Nuten ausgebildet sein, die entweder in Bezug auf die Felge radial oder in einem Winkel zur radialen Richtung schräg nach oben verlaufen.

Nur ein Teilabschnitt des Innenreifens und/oder des Fahrreifens kann mit wenigstens einem Vorsprung und/oder wenigstens einer Vertiefung versehen sein.

Gerade bei Fahrradreifen ist das Gewicht einer Reifenanordnung ein kritischer Parameter und muss möglichst gering gehalten werden. Aus Gewichtsgründen kann es daher vorteilhaft sein, lediglich einen Teilabschnitt des Innenreifens so zu gestalten, dass ein Luftkanal zwischen dem Innenreifen und dem Fahrreifen ausgebildet wird. Beispielsweise können leistenförmige Vorsprünge oder Rippen auf lediglich einem kleinen Teilstück an die Außenwand des Innenreifens und/oder an die Innenwand des Fahrreifens anvulkanisiert werden.

Es kann ein Einlageteil vorgesehen sein, das im montierten Zustand zwischen der Felge und dem Schlauch sowie zwischen dem Innenreifen und dem Fahrreifen angeordnet ist und das einen Luftkanal zwischen dem Innenreifen und dem Fahrreifen in dem Bereich bildet, in dem der Innenreifen an der Innenseite des Fahrreifens anliegt.

Ein solches Einlageteil kann beispielsweise in Form eines Felgenbands ausgebildet sein. Ein solches Felgenband ist dann entweder durchgehend vergleichsweise dick ausgebildet und hat wenigstens im Ventilbereich einen quer zur Umfangsrichtung verlaufenden Kanal, um einen Luftkanal zu bilden. Alternativ kann das Felgenband lediglich in einem Abschnitt dicker ausgebildet und mit der quer verlaufenden Nut oder dem quer verlaufenden Luftkanal versehen sein. Das Einlageteil kann auch als separates Teil ausgebildet sein, beispielsweise als Kunststoffteil, das beispielsweise lediglich im Ventilbereich auf die Felge aufgelegt wird und das so gestaltet ist, dass ein Luftkanal vom Ventil zu dem Zwischenraum zwischen dem Innenreifen und dem Fahrreifen gebildet ist. Das Einlageteil kann dabei aus elastischem Kunststoff, Gummi oder auch vergleichsweise hartem Kunststoff oder auch aus Metall gebildet sein. Vorteilhafterweise wird ein besonders leichtes Material gewählt und das Einlageteil wird auch in Umfangsrichtung gesehen möglichst kurz ausgebildet, um möglichst wenig zusätzliches Gewicht zu verursachen. Das Einlegeteil soll vorteilhafterweise auch als Dichtung zur Felge dienen.

Die Ventilmittel können ein Ventil in wenigstens einer der Seitenwände des Fahrreifens aufweisen.

Aufgrund des sehr geringen Luftdrucks, mit dem der Zwischenraum zwischen dem Innenreifen und dem Fahrreifen befüllt wird, beispielsweise lediglich im Bereich von etwa 0,5 bis 1,5 bar, insbesondere 1 bar, kann ein sehr leichtes und kompaktes Ventil verwendet werden, das ohne weiteres auch in einer der Seitenwände des Fahrreifens angeordnet werden kann, ohne dadurch die Fahreigenschaften des Fahrreifens negativ zu beeinflussen.

Es kann vorgesehen sein, dass das Ventil vollständig aus elastischem Gummimaterial und/oder Kunststoffmaterial gebildet ist.

Der Innenreifen kann wenigstens abschnittsweise aus luftdurchlässigem Gewebe gebildet sein.

Der Innenreifen ist hauptsächlich dazu vorgesehen, den innerhalb des Innenreifens angeordneten Schlauch auf der Felge zu halten, um dadurch zu verursachen, dass die Reifenwülste des Fahrreifens gegen die Felgenhörner gedrückt werden. Der Innenreifen muss aber selbst nicht luftdicht sein, da ja der innerhalb des Innenreifens angeordnete Schlauch im Wesentlichen luftdicht ausgeführt ist. Der Innenreifen ist auch nicht für einen Fahrbahnkontakt vorgesehen. Aus Gewichtsgründen kann es daher sinnvoll sein, den Innenreifen wenigstens abschnittsweise aus einem Gewebe zu bilden, das beispielsweise nicht gummiert und dadurch luftdurchlässig ist.

Das Gewebe kann mit zwei umlaufenden Reifenwülsten vernäht, verklebt oder vulkanisiert sein.

Auf diese Weise kann sichergestellt werden, dass der Innenreifen den Schlauch auch im aufgepumpten Zustand zuverlässig an der Felge hält.

Der Innenreifen kann wenigstens eine Lage Gewebe und zwei Reifenwülste aufweisen, wobei Kanten des Gewebes zum Innenraum des Innenreifens hin oder nach außen um die Reifenwülste umgeschlagen sind.

Eine solche Konstruktion des Innenreifens wird auch als Turn-up-Konstruktion bezeichnet. Eine solche Ausführung des Innenreifens ermöglicht es, den Innenreifen sehr leicht zu gestalten. Dennoch sorgen die Reifenwülste dafür, dass der innerhalb des Innenreifens angeordnete Schlauch zuverlässig auf der Felge gehalten wird.

Der Innenreifen kann als Gürtelreifen mit Diagonalkarkasse oder als Diagonalreifen mit Gürtel ausgebildet sein und kann wenigstens im Bereich seines größten Durchmessers einen Gewebegürtel aufweisen.

Der Gürtel sorgt dabei dafür, dass der im Innenraum des Innenreifens angeordnete Schlauch zuverlässig auf der Felge gehalten wird. Ein Gürtelreifen oder ein Diagonalreifen mit Gürtel kann in Bezug auf seine Höhe wesentlich flacher ausgebildet sein als ein Diagonalreifen ohne Gürtel, beispielsweise als sogenannter Niederquerschnittsreifen, der breiter als hoch ist. Ein Niederquerschnittsreifen kann dann den Fahrreifen bei starker Verformung, beispielsweise bei extremer Kurvenfahrt oder seitlichen Schlägen, wesentlich eher und besser abstützen als ein im Querschnitt annähernd kreisförmiger Diagonalreifen. Eine solche Gestaltung des Innenreifens als Gürtelreifen oder Diagonalreifen mit Gürtel, insbesondere als Niederquerschnittsreifen, ergibt dadurch im Fahrbetrieb der Reifenanordnung deutliche Vorteile. Der Gürtel kann als sogenannter Null-Grad-Gürtel ausgebildet sein, also lediglich in Umfangsrichtung umlaufende Fäden aufweisen. Alternativ kann der Gürtel auch als sogenannter Null-Grad-/Neunzig-Grad-Gürtel oder Gürtel aus Kreuzgewebe ausgeführt sein, indem er einerseits Fäden aufweist, die in Umfangsrichtung umlaufen und andererseits Fäden, die quer hierzu, senkrecht zur Umfangsrichtung, ausgerichtet sind.

Der Schlauch kann aus thermoplastischem Polyurethan (TPU) gebildet sein.

Die Herstellung des Schlauchs aus thermoplastischem Polyurethan erlaubt die Herstellung von sehr leichten Schläuchen, die insbesondere wesentlich leichter und stabiler sind als Gummischläuche.

Der Schlauch kann eine Unterseite aufweisen, die im montierten Zustand auf der Felge oder einem Felgenband aufliegt, wobei die Unterseite wenigstens einen Vorsprung und/oder wenigstens eine Vertiefung aufweist, wobei im montierten Zustand mittels des wenigstens einen Vorsprungs und/oder mittels der wenigstens einen Vertiefung ein Luftkanal zwischen der Felge und der Unterseite des Schlauchs gebildet ist.

Auf diese Weise kann mit dem Schlauch selbst ein Luftkanal gebildet werden, der dann für das Befüllen des Zwischenraums zwischen dem Innenreifen und dem Fahrreifen benötigt wird.

Der Innenreifen kann im Bereich der Reifenwülste des Fahrreifens mit dem Fahrreifen verbunden sein.

Auf diese Weise können der Innenreifen und der Fahrreifen bereits in der richtigen Position aneinander fixiert werden. Es ist beispielsweise auch möglich, dass der Innenreifen dann ohne Reifenwülste ausgeführt wird, da er ja mit den Reifenwülsten des Fahrreifens verbunden wird. Eine Verbindung des Innenreifens mit dem Fahrreifen kann beispielsweise durch Vernähen, Kleben und/oder Anvulkanisieren erfolgen. Alternativ kann der Fahrreifen ohne Wulstkern ausgeführt und mit dem Innenreifen verbunden werden.

Im montierten Zustand kann zwischen der Felge und dem Schlauch ein Felgenband vorgesehen sein, wobei das Felgenband wenigstens eine schräg oder quer zu seiner Längserstreckung verlaufende Nut und/oder wenigstens einen schräg oder quer zu seiner Längserstreckung verlaufenden Vorsprung aufweist, wobei die wenigstens eine Nut und/oder der wenigstens eine Vorsprung im montierten Zustand einen Luftkanal zwischen Felgenband und Schlauch bildet.

Durch Verwendung eines solchen speziellen Felgenbands kann ein Luftkanal zum Befüllen des Innenraums zwischen Innenreifen und Fahrreifen bereitgestellt werden. Das Felgenband kann dabei lediglich im Ventilbereich verdickt ausgeführt sein und die Nut aufweisen. Wird ein solches Felgenband verwendet, kann ein konventioneller Schlauch mit im Wesentlichen konstanter Wandstärke verwendet werden.

Es können Dichtmittel zwischen Ventil und Felge und zum Abdichten der Speichenbohrungen der Felge vorgesehen sein.

Eine Abdichtung zwischen Ventil und Felge oder zwischen den mehreren Ventilen und der Felge ist erforderlich, wenn ein Luftkanal vom Ventil bis in den Zwischenraum zwischen Innenreifen und Fahrreifen führt. Die Abdeckung und Abdichtung der übrigen Speichenbohrungen ist erforderlich, damit sich nicht der Schlauch durch den Innendruck in die Speichenbohrungen hineindrückt und dass der Fahrreifen keine Luft verliert. Die Dichtmittel können dabei beispielsweise eine konventionelle Ringdichtung zwischen einem Dichtflansch des Ventils und der Felge aufweisen. Die Dichtmittel können darüber hinaus als verstärkte und dickere Unterseite des Schlauchs ausgebildet sein oder auch als ein umlaufendes Felgenband, das zwischen der Felge und dem Schlauch sowie auch zwischen der Felge und einem Dichtflansch des Ventils angeordnet ist. Das Ventil kann auch dicht in einen etwas dickeren Abschnitt des Felgenbandes eingebunden sein. Die Dichtung zwischen Ventil und Felge kann beispielsweise auch durch ein Einlageteil bereitgestellt werden, das einerseits das Ventil zur Felge hin abdichtet und andererseits einen Luftkanal in den Zwischenraum zwischen Innenraum und Fahrreifen zur Verfügung stellt.

Im Rahmen der Erfindung können der Innenreifen und der Schlauch auch als sogenannter Schlauchreifen ausgebildet sein, bei dem der Schlauch innerhalb des ebenfalls torusförmigen und gegebenenfalls vernähten Innenreifens aufgenommen ist. Der Innenreifen muss für die Zwecke der Erfindung keinen Laufstreifen oder Lauffläche aufweisen und kann daher sehr leicht ausgeführt werden, beispielsweise als gummierte Karkasse. Der Innenreifen kann auf Basis eines herkömmlichen Schlauchreifens hergestellt sein und muss mindestens eine druckresistente Textillage aufweisen. Der Schlauch kann als Butyl-Schlauch, gegebenenfalls als TPU-Schlauch ausgebildet sein. Der Schlauch kann mit sehr hohem Druck, insbesondere zwischen 6 bar und 15 bar befüllt werden und hält den Fahrreifen dadurch sicher auf der Felge, wobei der Zwischenraum zwischen Felge und Fahrreifen dann mit einem niedrigen Luftdruck, insbesondere zwischen 3 bar und 6 bar, befüllt werden kann. Auf der Felge wird dieser Schlauchreifen, der den Schlauch und den Innenreifen kombiniert, durch den eigenen Anpressdruck gehalten. Eine Verklebung dieses Schlauchreifens mit der Felge ist nicht erforderlich. Der Fahrreifen muss für den schlauchlosen Betrieb geeignet sein.

Das Einlageteil kann entweder innerhalb des Schlauchreifens zwischen Schlauch und Innenreifen oder zwischen dem Schlauchreifen und dem Fahrreifen, also zwischen dem Innenreifen und dem Fahrreifen angeordnet werden. Im ersteren Fall muss der Innenreifen entweder luftdurchlässig ausgebildet oder mit einer Durchgangsöffnung in seiner Wand versehen sein. Die Durchgangsöffnung wird dabei in der Überlappung der Verstärkungslage also der Textillage des Innenreifens, angeordnet.

Es können ein Zweiwegeventil oder zwei Einwegventile eingesetzt werden. Die Felge muss luftdicht ausgebildet sein oder es sind Mittel zum Abdichten der Felge, insbesondere Dichtkegek am Ventil zum Abdichten der Ventilbohrungen und beispielsweise ein Felgenband zum Abdichten der Speichenbohrungen, vorgesehen.

Auch bei Kombination des Innenreifens und des Schlauchs zu einem Schlauchreifen ergeben sich die erfindungsgemäßen Vorteile, nämlich dass der Innenreifen den Fahrreifen sicher auf der Felge hält und der Fahrreifen dadurch mit vergleichsweise geringen Drücken gefahren werden kann. Darüber hinaus ergeben sich extrem gute Notlaufeigenschaften, da der Fahrreifen auch bei völligem Luftverlust nicht von der Felge rutscht. Auch gegen Durchschläge auf die Felgenhörner bietet die Erfindung zuverlässig Schutz. Durch Kombination des Innenreifens und des Schlauchs zu einem Schlauchreifen kann die Erfindung vornehmlich für breite Rennradreifen oder Crossreifen eingesetzt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten Ausführungsformen können dabei in beliebiger Weise miteinander kombiniert werden, ohne den Rahmen der Erfindung zu überschreiten. In den Zeichnungen zeigen:
- Fig. 1: eine schematische Schnittansicht einer erfindungsgemäßen Reifenanordnung,
- Fig. 2: eine abschnittsweise schematische Seitenansicht der Reifenanordnung der Fig. 1 im teilweise montierten Zustand und in schematischer Darstellung,
- Fig. 3: eine weitere abschnittsweise schematische Seitenansicht der erfindungsgemäßen Reifenanordnung der Fig. 1 im teilweise montierten Zustand,
- Fig. 4 bis 8: mehrere Ansichten eines Einlageteils der erfindungsgemäßen Reifenanordnung der Fig. 1,
- Fig. 9 bis 11: mehrere Ansichten eines ersten Ventils einer erfindungsgemäßen Reifenanordnung,
- Fig. 12 und 13: mehrere Ansichten eines zweiten Ventils einer erfindungsgemäßen Reifen-anordnung,
- Fig. 14 und 15: mehrere Ansichten eines zweiten Ventils der erfindungsgemäßen Reifenan-ordnung gemäß einer zweiten Ausführungsform,
- Fig. 16 bis 21: mehrere Ansichten eines ersten Ventils einer erfindungsgemäßen Reifenanordnung gemäß einer weiteren Ausführungsform,
- Fig. 22: eine Schnittansicht einer Fahrradfelge mit einer nicht erfindungsgemäßen Reifenanordnung gemäß einer weiteren Ausführungsform, wobei ein Ventil lediglich teilweise geschnitten ist,
- Fig. 23: eine weitere Schnittansicht der Fahrradfelge mit der Reifenanordnung der Fig. 22, wobei die Schnittebene hier entfernt von dem Ventil angeordnet ist,
- Fig. 24: eine abschnittsweise, schematische Seitenansicht des Innenreifens der Reifenanordnung der Fig. 22,
- Fig. 25: eine Ansicht auf die Schnittebene IV-IV in Fig. 24,
- Fig. 26: eine Schnittansicht einer Fahrradfelge mit einer nicht erfindungsgemäßen Reifenanordnung gemäß einer weiteren Ausführungsform im Ventilbereich,
- Fig. 27: eine weitere Schnittansicht der Fahrradfelge mit der Reifenanordnung der Fig. 26 entfernt vom Ventilbereich,
- Fig. 28: eine Schnittansicht einer Fahrradfelge mit einer nicht erfindungsgemäßen Reifenanordnung gemäß einer weiteren Ausführungsform im Ventilbereich,
- Fig. 29: eine Schnittansicht der Fahrradfelge mit der Reifenanordnung der Fig. 28 entfernt vom Ventilbereich,
- Fig. 30: eine Schnittansicht einer Fahrradfelge mit einer nicht erfindungsgemäßen Reifenanordnung gemäß einer weiteren Ausführungsform im Bereich eines ersten Ventils,
- Fig. 31: eine weitere Schnittansicht der Fahrradfelge mit der Reifenanordnung der Fig. 30 im Bereich eines zweiten Ventils,
- Fig. 32: eine Schnittansicht der Fahrradfelge mit der Reifenanordnung der Fig. 30 entfernt von dem Bereich des ersten bzw. zweiten Ventils,
- Fig. 33: eine Schnittansicht einer Fahrradfelge mit einer nicht erfindungsgemäßen Reifenanordnung gemäß einer weiteren Ausführungsform im Ventilbereich,
- Fig. 34: eine Schnittansicht der Fahrradfelge mit der Reifenanordnung der Fig. 33 entfernt vom Ventilbereich,
- Fig. 35: eine Schnittansicht einer Fahrradfelge mit einer nicht erfindungsgemäßen Reifenanordnung gemäß einer weiteren Ausführungsform im Bereich eines ersten Ventils,
- Fig. 36: eine Schnittansicht der Fahrradfelge mit der Reifenanordnung der Fig. 35 im Bereich eines zweiten Ventils,
- Fig. 37: eine Schnittansicht der Fahrradfelge mit der Reifenanordnung der Fig. 35 in einem Bereich entfernt von dem ersten und dem zweiten Ventil,
- Fig. 38: eine Schnittansicht einer Fahrradfelge mit einer nicht erfindungsgemäßen Reifenanordnung gemäß einer weiteren Ausführungsform im Ventilbereich,
- Fig. 39: eine Schnittansicht der Fahrradfelge mit der Reifenanordnung der Fig. 38 in einem Bereich entfernt vom Ventil,
- Fig. 40: eine schematische Schnittansicht zur Verdeutlichung der Karkassenlagen eines Innenreifens für die erfindungsgemäße Reifenanordnung,
- Fig. 41: eine schematische Darstellung zur Verdeutlichung der Richtungen der Karkassenfäden in dem Innenreifen der Fig. 40,
- Fig. 42: eine schematische Schnittansicht eines Innenreifens für die erfindungsgemäße Reifenanordnung zur Verdeutlichung der Anordnung einer Karkassenlage in dem Innenreifen,
- Fig. 43: eine schematische Darstellung zur Verdeutlichung der Ausrichtung der Gewebefäden in dem Innenreifen der Fig. 42,
- Fig. 44: eine schematische Schnittansicht eines Innenreifens für die erfindungsgemäße Reifenanordnung zur Verdeutlichung der Anordnung einer Karkassenlage in dem Innenreifen,
- Fig. 45: eine schematische Darstellung der Ausrichtung der Karkassenfäden in dem Innenreifen der Fig. 44,
- Fig. 46: eine schematische Schnittansicht eines Innenreifens für die erfindungsgemäße Reifenanordnung zur Verdeutlichung der Anordnung eines Gürtels,
- Fig. 47: eine schematische Darstellung zur Verdeutlichung der Ausrichtung der Gewebefäden in dem Gürtel der Fig. 46,
- Fig. 48: eine schematische Schnittansicht eines Innenreifens für die erfindungsgemäße Reifenanordnung zur Verdeutlichung der Anordnung eines Endlosgürtels,
- Fig. 49: eine schematische Darstellung zur Verdeutlichung der Ausrichtung der textilen Fäden in dem Endlosgürtel der Fig. 48,
- Fig. 50: eine schematische Schnittansicht einer Reifenanordnung gemäß einer weiteren Ausführungsform der Erfindung,
- Fig. 51: eine schematische Schnittansicht einer Reifenanordnung gemäß einer weite-ren Ausführungsform der Erfindung und
- Fig. 52: eine schematische Schnittansicht einer Reifenanordnung gemäß einer weiteren Ausführungsform der Erfindung.

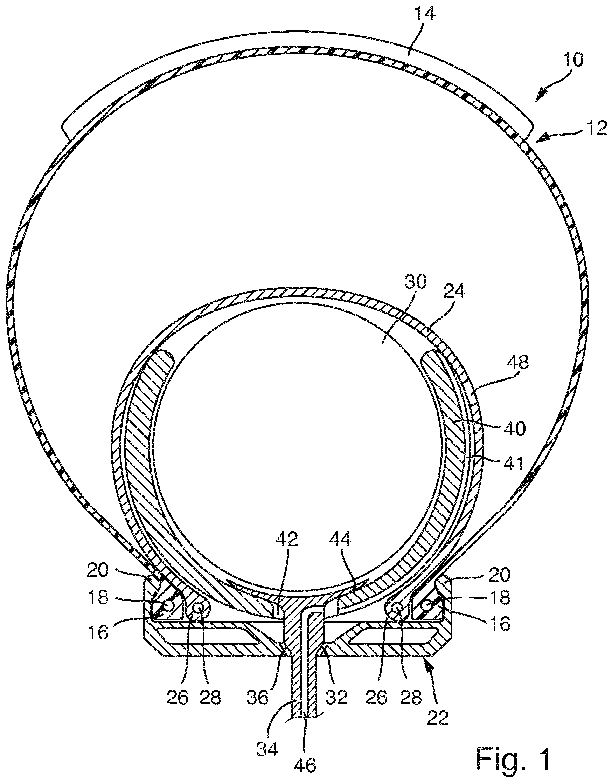

Die Darstellung der Fig. 1 zeigt in einer schematischen Schnittansicht eine erfindungsgemäße Reifenanordnung 10 mit einem Fahrreifen 12, der einen Laufstreifen 14 und zwei Reifenwülste 16 aufweist. Jeder der Reifenwülste 16 ist mit einem Wulstkern 18 versehen. Die Reifenwülste 16 des Fahrreifens 12 liegen an den Innenseiten der Felgenhörner 20 einer Felge 22 an. Die Felge 22 selbst ist in nicht dargestellter Weise luftdicht ausgeführt, das bedeutet, dass die nicht dargestellten Speichenbohrungen in der Felge 22 luftdicht abgedichtet sind, beispielsweise durch Auflegen oder Aufkleben eines in Fig. 1 nicht dargestellten Felgenbands auf das Bett der Felge 22, auf dem auch die Unterseiten der Wülste 16 des Fahrreifens 12 aufliegen.

Die erfindungsgemäße Reifenanordnung 10 weist weiter einen Innenreifen 24 auf, der innerhalb des Fahrreifens 12 angeordnet ist und der ebenfalls zwei Reifenwülste 26 mit jeweils einem Wulstkern 28 aufweist. Die Wülste 26 des Innenreifens 24 liegen mit ihrer Unterseite auf dem Bett der Felge 22 auf und mit ihren Außenseiten liegen sie an der Innenseite der Reifenwülste 16 des Fahrreifens 12 an. Es wird dabei darauf hingewiesen, dass die Darstellung der Fig. 1 schematisch ist. Dargestellt ist ein geringfügiger Zwischenraum zwischen der Außenseite des Fahrreifens 24 und der Innenseite des Fahrreifens 12, der in der Realität nicht vorhanden ist. Dies soll verdeutlichen, dass der Innenreifen 24 zwar die Reifenwülste 16 des Fahrreifens 12 in Fig. 1 nach links bzw. rechts gegen die Innenseite der Felgenhörner 20 der Felge 22 drückt, dass aber kein Dichteingriff zwischen der Außenseite des Innenreifens 24 und der Innenseite des Fahrreifens 12 vorliegt.

Innerhalb des Innenreifens 24 ist ein Schlauch 30 angeordnet, der mittels eines in Fig. 1 nicht dargestellten Ventils mit Luft befüllt werden kann. Der Schlauch 30 ist aus elastischem Material ausgebildet. Wird der Schlauch 30 mit Luft befüllt, so weitet er sich im Wesentlichen allseitig aus und versucht auch, seinen Durchmesser zu vergrößern. Dies wird durch den Innenreifen 24 verhindert, der den Schlauch 30 in der in Fig. 1 dargestellten Position, also im Wesentlichen auf der Felge 22 hält. Hierzu sind die Wulstkerne 28 des Innenreifens 24 aus sehr zugfesten und hochmodulen Fasern gebildet, beispielsweise Zylonfasern (Poly(p-phenylen-2,6-benzobisoxazol)).

Die Schnittebene der Fig. 1 ist durch eine Stelle der Felge 22 gelegt, in der die Felge 22 eine Ventilbohrung 32 für ein zweites Ventil 34 aufweist, das nicht zum Befüllen des Schlauchs 30, sondern zum Befüllen eines Zwischenraums zwischen der Felge 22 und dem Fahrreifen 12 vorgesehen ist. Für die Zwecke der Erfindung wesentlich ist dabei, dass das Ventil 34 luftdicht in der Ventilbohrung 32 der Felge 22 aufgenommen ist. Hierzu ist das Ventil 34 mit einem in Fig. 1 lediglich schematisch angedeuteten Dichtkonus 36 aus elastischem Material versehen, der durch den Innendruck des Schlauchs 30 in Fig. 1 nach unten gegen die ebenfalls konisch ausgeführte Ventilbohrung 32 der Felge 22 gedrückt wird und dadurch eine luftdichte Abdichtung bereitstellt.

Zwischen dem Innenreifen 24 und dem Schlauch 30 ist ein Einlageteil 40 vorgesehen, das klammerartig ausgebildet ist und den Schlauch 30 abschnittsweise umgreift. Das Einlageteil 40 hat in der Schnittansicht der Fig. 1 die Form eines teilweise aufgeschnittenen Kreiszylinders, so dass es den Schlauch 30 umfassen kann und auch an die kreisartige Querschnittsform des Innenreifens 24 angepasst ist. Das Einlageteil 40 weist eine Durchgangsbohrung 42 auf, durch die das Ventil 34 gesteckt ist. Eine Fußplatte 44 des Ventils 34 liegt dann zwischen dem Einlageteil 40 und dem Schlauch 30. Eine Auslassbohrung 46 des Ventils 32 mündet in der Durchgangsbohrung 42. Ausgehend von der Durchgangsbohrung 42 sind in dem Einlageteil 40 mehrere Rinnen 42 vorgesehen, die dann einen Luftkanal zwischen dem Einlageteil und dem Schlauch 30 zur Verfügung stellen. Die Rinnen 42 sind dabei so tief ausgebildet, dass auch bei Befüllung des Schlauchs 30 mit sehr hohem Druck die Rinnen 42 nicht vollständig verlegt bzw. abgedichtet werden. Die Rinnen 42 führen bis zu dem in Fig. 1 rechten freien Ende des Einlageteils 40. Im Bereich des Einlageteils 40 ist dann in dem Innenreifen 24 eine Durchgangsöffnung 48 vorgesehen, wobei der Bereich der Durchgangsöffnung 48 am Einlageteil 40 anliegen sollte. Ein Luftkanal zum Befüllen eines Zwischenraums zwischen der Felge 22 und dem Fahrreifen 12 führt damit von der Auslassbohrung 46 des Ventils 32 über die Durchgangsöffnung 42 im Einlageteil 40, durch die Rinnen 41 im Einlageteil 40 und schließlich durch die Durchgangsöffnung 48 im Innenreifen 24. Die Durchgangsöffnung 48 kann einen Durchmesser zwischen 2mm und 8mm haben, bevorzugt sind 5mm. Zu kleine Öffnungen können durch Dichtmilch verschlossen werden, zu große Öffnungen schwächen die Struktur des Innenreifens. Neben diesem beschriebenen Luftkanal kann die Luft auch aus der Durchgangsöffnung 42 in den Raum zwischen dem Einlageteil 40 und der Felge 22 und dann beispielsweise zwischen dem Innenreifen 24 und dem Fahrreifen 12 in den oberhalb des Innenreifens 24 liegenden Bereich gelangen. Es ist dabei wesentlich, festzustellen, dass die Luftkammer zwischen der Felge 22 und dem Fahrreifen 12 gebildet wird. Auch der Bereich, der in Fig. 1 zwischen dem Einlageteil 40 und der Felge 22 liegt, wird also mit dem Luftdruck befüllt, der dann auch innerhalb des Fahrreifens anliegt. Der Schlauch 30, der eine weitere Luftkammer bildet, ist innerhalb dieser beschriebenen Luftkammer angeordnet und wird von dieser umschlossen.

Im Fahrbetrieb ist vorgesehen, den Schlauch 30 mit vergleichsweise hohem Luftdruck, beispielsweise 6 bar, zu befüllen. Der Schlauch 30 wird durch den Innenreifen 24 an der Felge 22 gehalten. Diesbezüglich ist festzustellen, dass die Fig. 1 eine schematische Darstellung ist und im aufgepumpten Zustand die Zwischenräume zwischen den einzelnen Bauteilen nicht mehr vorhanden oder wesentlich geringer sind. Über den Schlauch 30 wird auf die Reifenwülste 26 des Innenreifens ein Druck ausgeübt, der in der Fig. 1 auch nach links bzw. rechts wirkt. Dieser Druck wird über die Reifenwülste 26 des Innenreifens 24 auf die Reifenwülste 16 des Fahrreifens 12 übertragen, so dass diese gegen die Felgenhörner 20 der Felge 22 gedrückt werden. Über die Befüllung des Schlauchs 30 mit hohem Druck wird dadurch sichergestellt, dass die Reifenwülste 16 des Fahrreifens 12 zuverlässig an der Felge 22 gesichert sind.

Dies ermöglicht es, über das Ventil 34 die zwischen der Felge 22 und dem Fahrreifen 12 gebildete Luftkammer nur mit sehr geringem Druck zu befüllen. Dadurch können sehr vorteilhafte Fahreigenschaften erzielt werden. Wie ausgeführt besteht auch in extremen Fahrsituationen dann nicht die Gefahr, dass die Reifenwülste 16 des Fahrreifens 12 von der Felge 22 rutschen. Auch ein nur kurzfristiges Lösen der Reifenwülste 16 von der Felge 22 mit dadurch verursachtem Luftverlust wird vermieden. Darüber hinaus wird, wie Fig. 1 zu entnehmen ist, auch ein Durchschlag des Fahrreifens 12 auf die Oberseiten der Felgenhörner 20 mit eventueller Beschädigung und Luftverlust vermieden. Auch dies ermöglicht es, die Luftkammer zwischen der Felge 22 und dem Fahrreifen 12 mit nur sehr geringem Luftdruck zu befüllen, beispielsweise 0,8 bar.

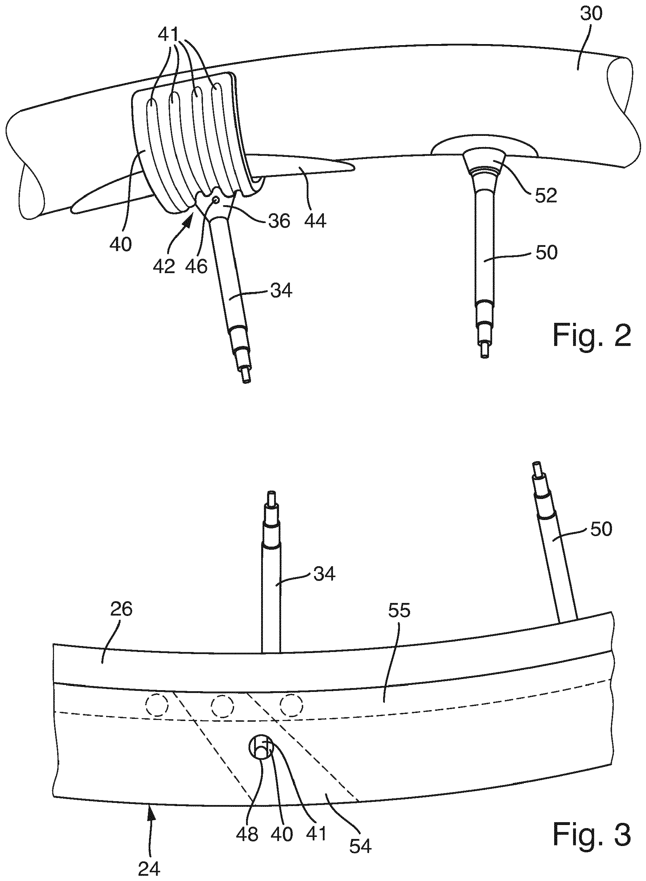

Die Darstellung der Fig. 2 zeigt schematisch einen Abschnitt des Schlauchs 30 der Reifenanordnung der Fig. 1. Der Schlauch 30 ist mit einem Ventil 50 versehen, das mit dem Schlauch 30 verbunden ist und zu dessen Befüllung vorgesehen ist. Am Übergang des Ventils 50 zum Schlauch 30 ist ein Dichtkonus 52 aus elastischem Material vorgesehen, der das Ventil 50 gegen die in Fig. 2 nicht dargestellte Felge abdichtet.

In Fig. 2 ist darüber hinaus auch das zweite Ventil 34 dargestellt, das, wie erläutert wurde, den Dichtkonus 36 aus elastischem Material aufweist, der dann für eine Abdichtung gegenüber der nicht dargestellten Felge sorgt. Das Ventil 34 ist mit der Fußplatte 44 versehen und in Fig. 2 von oben her in die Durchgangsbohrung 42 des Einlageteils 40 gesteckt. Gut zu erkennen sind in Fig. 2 die mehreren Rinnen 41 des Einlageteils 40, die, wie erläutert wurde, mindestens einen Luftkanal zwischen dem Schlauch 30 und dem Einlageteil 40 bereitstellen.

Die Darstellung der Fig. 3 zeigt abschnittsweise die erfindungsgemäße Reifenanordnung der Fig. 1 bzw. Fig. 2, wobei zusätzlich der Innenreifen 24 dargestellt ist. Der Schlauch 30 ist in der Darstellung der Fig. 3 dadurch nicht mehr zu erkennen, lediglich das Ventil 50 ist dargestellt. Weiterhin dargestellt ist das Ventil 34, das, siehe Fig. 2, in die Durchgangsöffnung des Einlageteils 42 gesteckt ist, wobei das Einlageteil 40 in der Darstellung der Fig. 3 durch die Durchgangsöffnung 48 im Innenreifen 24 zu erkennen ist. In Fig. 3 ist durch die Durchgangsöffnung 48 ebenfalls eine der Rinnen 41 im Einlageteil 40 zu erkennen.

Die Durchgangsöffnung 48 ist in einem Bereich 54 des Innenreifens 24 angeordnet, in dem die Gewebelagen der Karkasse des Innenreifens 24 überlappt sind. Dieser Bereich 54 ist durch gestrichelte Linien angedeutet. In diesem Bereich ist das Gewebe des Innenreifens 24 doppellagig und dadurch wesentlich stabiler, so dass die Durchgangsöffnung 48 in den Innenreifen 24 eingebracht werden kann, ohne dass dessen Beschädigung zu befürchten ist, wenn der Schlauch 30 auf einen sehr hohen Druck aufgepumpt wird. Auch in dem gestrichelt angedeuteten Bereich 55 oberhalb der Reifenwülste ist das Gewebe mindestens doppellagig und die Durchgangsöffnung könnte in diesem Bereich angeordnet werden. Mögliche Positionen der Durchgangsöffnung sind gestrichelt angedeutet.

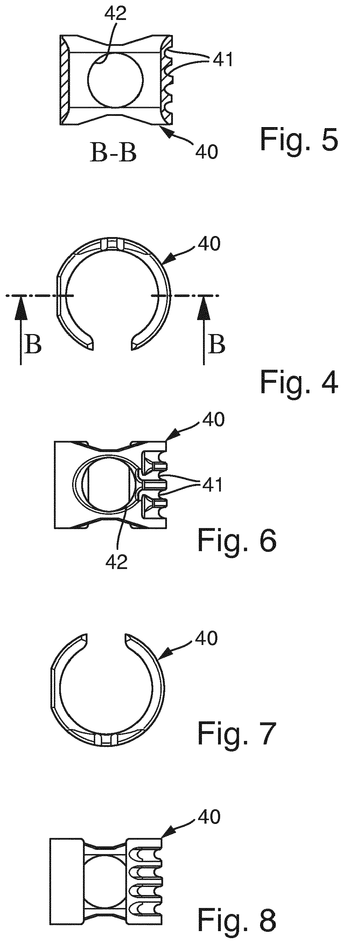

Die Darstellung der Fig. 4 zeigt eine Vorderansicht des Einlageteils 40. Das Einlageteil 40 ist als Kunststoffspritzgussteil ausgebildet und in Fig. 4 ist die klammerartige Ausbildung des Einlageteils 40 gut zu erkennen.

Fig. 5 zeigt eine Ansicht auf die Schnittebene B-B in Fig. 4. Zu erkennen ist die Durchgangsöffnung 42 im Einlageteil 40 sowie die nur an einem Schenkel des Einlageteils ausgebildeten Rinnen 41. Die Rinnen 41 können zur Vereinfachung der Handhabung des Einlageteils 40 auch an beiden Schenkeln vorgesehen sein. Die Durchgangsöffnung 42 ist dabei deutlich größer ausgeführt als der Fuß des Ventils 34, siehe Fig. 1, da ja die Luft aus dem Auslass 46 ausströmen und dann teilweise in die Rinnen 41 eintreten soll.

Fig. 6 zeigt eine Draufsicht auf das Einlageteil 40. Der Übergang zwischen der Durchgangsöffnung 42 und den mittleren beiden Rinnen 41 ist abgerundet ausgeführt, um einen Luftdurchtritt zu erleichtern.

Fig. 7 zeigt eine weitere Seitenansicht und Fig. 8 eine Ansicht von oben.

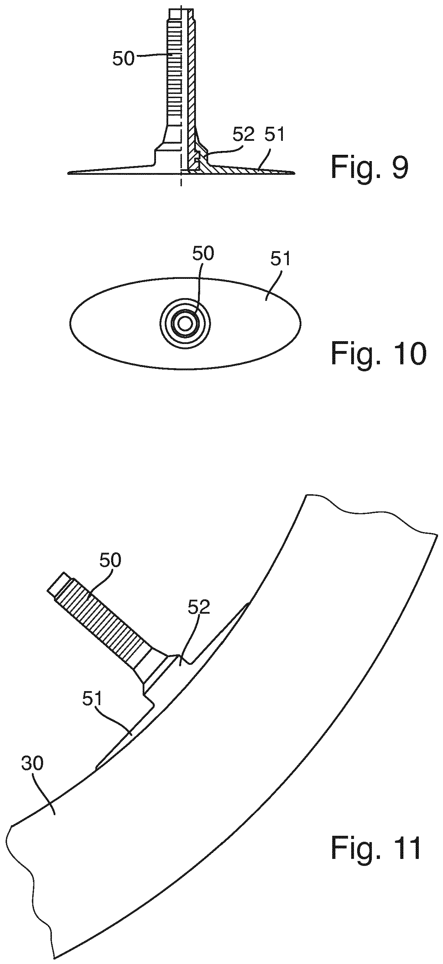

Fig. 9 zeigt eine teilweise geschnittene Ansicht eines ersten Ventils der erfindungsgemäßen Reifenanordnung, das, siehe Fig. 11, für das Befüllen des Schlauchs 30 vorgesehen ist. Das Ventil 50 weist eine Fußplatte 51 auf, die mit dem Schlauch 30 verbunden wird. Einstückig mit der Fußplatte 51 ist der Dichtkonus 52 ausgebildet, der dann für die Abdichtung des Ventils 50 gegen die Felge sorgt. Die Fußplatte 51 hat eine mittige Öffnung, durch die der Schlauch 30 befüllt wird. Fig. 10 zeigt eine Draufsicht auf das Ventil 50 und Fig. 11 zeigt eine abschnittsweise Seitenansicht des Schlauchs 30 mit dem Ventil 50.

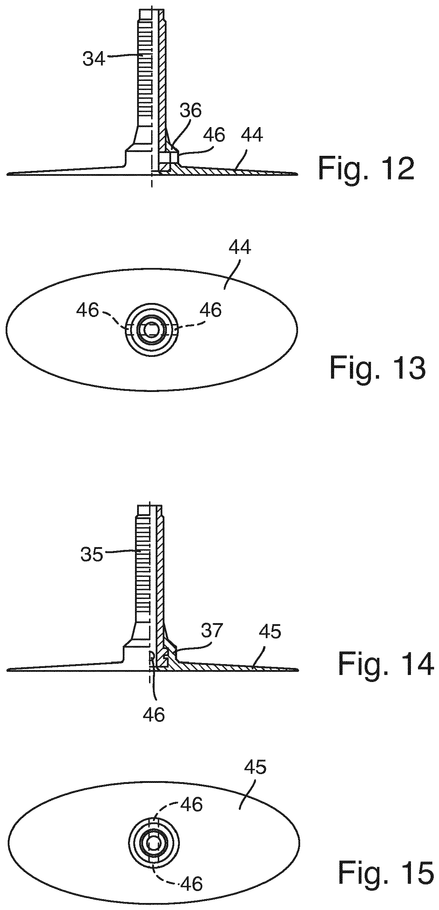

Fig. 12 zeigt eine teilweise geschnittene Seitenansicht einer ersten Ausführungsform des zweiten Ventils 34. Wie bereits erläutert wurde, weist das Ventil 34 die Fußplatte 44 auf, die einstückig mit dem Dichtkonus 36 verbunden ist. Der Auslass 46 des Ventils 34 tritt an gegenüberliegenden Seiten des Dichtkonus 36 parallel zu einer längeren Halbachse der ellipsenförmigen Fußplatte 44 aus, siehe Fig. 13. Fig. 14 zeigt eine zweite Ausführungsform des zweiten Ventils 35, bei dem der Dichtkonus 37 ebenfalls einstückig mit der Fußplatte 45 ausgebildet ist, bei dem der Auslass 46 aber parallel zur kürzeren Halbachse der ebenfalls ellipsenförmigen Fußplatte 45 austritt.

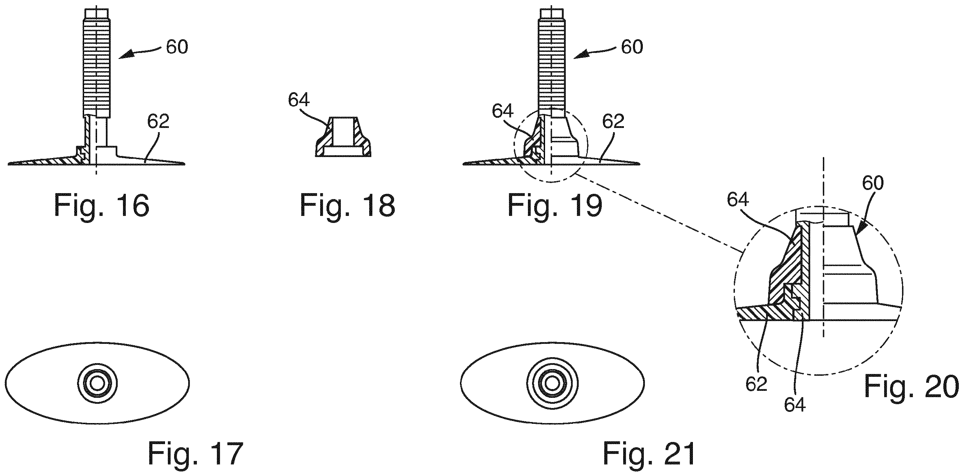

Fig. 16 zeigt eine Ausführungsform eines ersten Ventils 60, das zur Verbindung mit dem Schlauch 30 vorgesehen ist. Das Ventil 60 weist eine Fußplatte 62 auf, die aber nicht einstückig mit einem Dichtkonus 64 ausgebildet ist, der in Schnittansicht in Fig. 18 dargestellt ist. Vielmehr wird der Dichtkonus 64, siehe Fig. 19, von oben her auf das Ventil 60 aufgeschoben und liegt dann mit seiner Unterseite auf der Fußplatte 62 auf. Die getrennte Ausbildung von Dichtkonus 64 und Ventil 60 bzw. Fußplatte 62 ermöglicht es, das Material des Dichtkonus 64 auf eine gute Dichtwirkung hin zu optimieren. Das Material der Fußplatte 62 kann hingegen auf eine gute Anvulkanisierbarkeit an den Schlauch 30 optimiert werden. Ersichtlich ist es möglich, auch das zweite Ventil, das nicht mit dem Schlauch 30 verbunden werden soll, mit einem separaten Dichtkonus 64 zu versehen. Die Vorteile sind hierbei die gleichen wie bereits erläutert wurde.

Fig. 20 zeigt eine vergrößerte Darstellung einer Einzelheit des Ventils 60 aus Fig. 19, wobei die Anbindung der Fußplatte 62 an den metallischen Grundkörper 64 des Ventils 60 sowie auch die Anbindung des Dichtkonus 64 einerseits an den metallischen Grundkörper 64 und andererseits an die Fußplatte 62 gut zu erkennen ist.

Die Fig. 17 und 21 zeigen jeweils Draufsichten auf das Ventil 60, Fig. 17 eine Draufsicht auf das Ventil 60 der Fig. 16 noch ohne den Dichtkonus 64 und Fig. 21 auf das Ventil der Fig. 19 mit dem Dichtkonus 64.

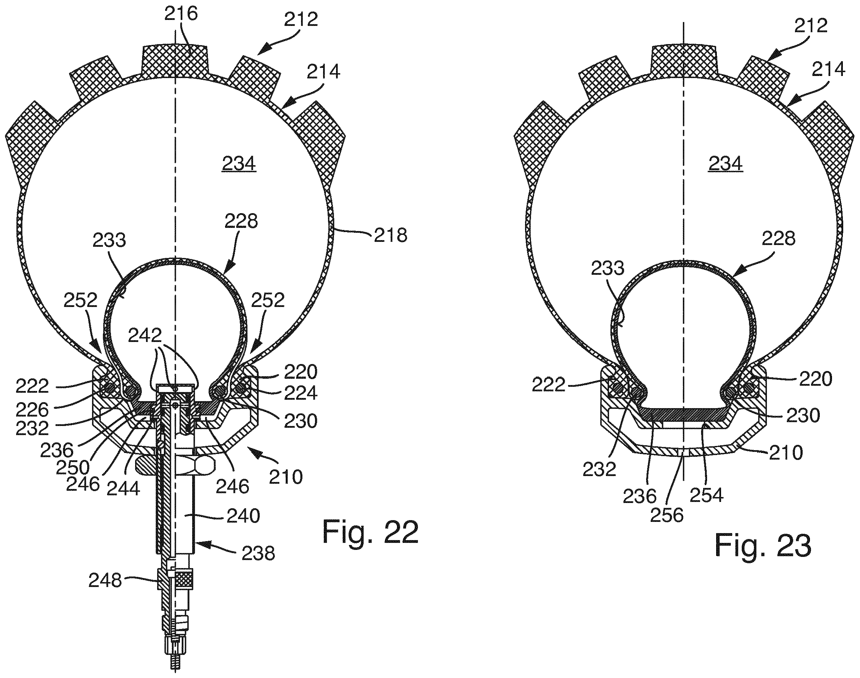

In der Schnittansicht der Fig. 22 ist eine Fahrradfelge 210 zu erkennen, die mit einer nicht erfindungsgemäßen Reifenanordnung 212 versehen ist. Die Reifenanordnung 212 weist einen Fahrreifen 214 auf, der eine Lauffläche 216 hat, die mit einem Profil versehen sein kann. Darüber hinaus weist der Fahrreifen 214 eine Karkasse 218 auf, die im Querschnitt allgemein U-förmig ausgebildet ist und im Bereich ihrer freien Enden jeweils einen Reifenwulst 220, 222 aufweist. Die Reifenwülste 220, 222 haben umlaufende Wulstkerne 224, 226, die beispielsweise aus Draht oder sehr stabilen Kunststofffasern bestehen können. Der Fahrreifen 214 ist im Wesentlichen konventionell ausgebildet, beispielsweise wie ein konventioneller oder schlauchloser Fahrradreifen. Wird ein konventioneller Fahrradreifen verwendet, kann die Verwendung einer Dichtmilch erforderlich sein.

Die Reifenanordnung 212 weist darüber hinaus einen Innenreifen 228 auf. Der Innenreifen 228 ist, wie der Fahrreifen 214, mit zwei Reifenwülsten 230, 232 versehen, die jeweils mit Verstärkungskernen versehen sind. Zwischen einer Außenfläche des Innenreifen 228 und einer Innenfläche des Fahrreifens 214 ist ein Zwischenraum 234 definiert, der mit einem ersten, niedrigen Luftdruck, beispielsweise im Bereich von 1 bar, befüllt wird.

Innerhalb des Innenreifens 228 ist ein Schlauch 233 vorgesehen, der im dargestellten aufgepumpten Zustand dicht an der Innenseite des Innenreifens 228 anliegt. Der Schlauch 233 besteht aus elastischem Material, beispielsweise Kunststoff oder Gummi, und ist im Gegensatz zu dem Fahrreifen 218 und dem Innenreifen 228 nicht mit Gewebeverstärkungen versehen. Eine Unterseite des Schlauchs 233, die auf dem Felgenbett aufliegt, ist mit gegenüber der übrigen Wandung des Schlauchs 233 mit erhöhter Dicke und/oder aus stabilerem Material ausgeführt. In diese Unterseite ist ein Zweiwegeventil 238 eingebracht. Die Unterseite 236 mit erhöhter Dicke kann dabei lediglich im Ventilbereich ausgebildet sein, bei der dargestellten Ausführungsform, siehe Fig. 23, ist die Unterseite 236 aber über den gesamten Umfang der Felge 210 mit gegenüber der übrigen Wand größerer Dicke ausgeführt. Das Zweiwegeventil 238 weist ein Ventilgehäuse 240 auf, das rohrförmig ausgebildet ist und das in die Unterseite 236 des Schlauchs 233 einvulkanisiert, eingeklebt oder eingeschraubt ist. In den Innenraum des Schlauchs 233 ragt ein Abschnitt des Ventilkörpers 238 vor, der mit mehreren Durchgangsöffnungen 242 versehen ist. Über die Durchgangsöffnungen 242 kann der Innenraum des Schlauchs 233 befüllt werden. Das obere Ende des Ventilkörpers 238 sollte nicht über die Oberkanten der Felgenhörner hinausragen, so dass der Ventilkörper 238 bei einem vollständigen Durchschlag des Fahrreifens 218 bis auf die Felgenhörner keinen Schaden nimmt.

Das Ventilgehäuse 240 des Zweiwegeventils 38 weist wenigstens zwei weitere, sich radial erstreckende Auslassöffnungen 244 auf, die eine Verbindung zwischen dem Innenraum des Ventilkörpers 240 und einem Zwischenraum zwischen der Unterseite 236 des Schlauchs 233 und dem Felgenbett der Felge 210 herstellen. Die Unterseite 36 ist in dem Bereich, in dem die Durchgangsöffnungen 244 münden, mit einer quer zur Umfangsrichtung der Felge 210 und des Schlauchs 233 verlaufenden Nut 246 versehen, die einen Luftkanal von einer jeweiligen Durchgangsöffnung 244 des Ventilkörpers 238 bis zu den Reifenwülsten 230, 232 des Innenreifens 228 bilden.

In der in Fig. 22 dargestellten Stellung ist das Zweiwegeventil 238 verschlossen und somit kann keine Luft aus dem Schlauch 233 durch die Öffnungen 242 oder aus dem Luftkanal 246 durch die Durchgangsöffnungen 244 entweichen.

Wird ein Ventilkörper 248 ausgehend von der in Fig. 22 dargestellten Stellung nach oben verschoben, so wird dadurch eine Verbindung zwischen dem Querkanal 250 im Ventilkörper 248 und den Durchgangsöffnungen 242 hergestellt. In dieser Stellung kann dann der Innenraum des Schlauchs 233 aufgepumpt werden, es kann der Druck geprüft und es kann Luft abgelassen werden.

Wird der Ventilkörper 248 ausgehend von der in Fig. 22 dargestellten Stellung so weit zurückgezogen, in der Fig. 22 nach unten, bis ein Querkanal 250 oder mehrere Querkanäle 250 mit den Durchgangsöffnungen 244 im Ventilgehäuse 238 fluchten, kann Luft in den Luftkanal 246 und von dort aus in den Zwischenraum 234 zwischen dem Innenreifen 228 und dem Fahrreifen 218 gepumpt werden oder aus diesem Zwischenraum 234 ausgelassen werden.

In seinem im Fig. 22 unterem Bereich ist in dem Ventilgehäuse ein konventionelles Rückschlagventil angeordnet.

Um den Luftkanal 246 auch in einem Bereich, in dem die Außenseite der Reifenwülste 230, 232 des Innenreifens 228 an den Innenseiten der Reifenwülste 220, 222 des Fahrreifens 214 anliegen, fortzusetzen, ist der Innenreifen auf seiner Außenseite mit mehreren Rippen 252 versehen, wobei zwischen jeweils zwei Rippen ein Luftkanal gebildet ist, der den Luftkanal 246 in der Unterseite 236 des Schlauchs 233 fortsetzt.

Typischerweise wird bei der erfindungsgemäßen Reifenanordnung der Schlauch 233 über das Zweiwegeventil 238 mit einem vergleichsweise hohen Druck, beispielsweise 6 bis 8 bar, befüllt. Dadurch ist sichergestellt, dass die Reifenwülste 230, 232 des Innenreifens 228 mit hoher Kraft nach außen, in der Fig. 22 nach links bzw. rechts, gedrückt werden, und dadurch auch die Reifenwülste 220, 222 des Fahrreifens 214 nach außen gegen die Felgenhörner der Felge 210 drücken. Dadurch ist sichergestellt, dass sich die Reifenwülste 220, 222 des Fahrreifens 214 nicht von den Felgenhörnern der Felge 210 lösen. Durch diese Vorspannkraft auf die Reifenwülste 222, 220 des Fahrreifens 214 wird es möglich, den Zwischenraum 234 zwischen dem Innenreifen 228 und dem Fahrreifen 214 mit nur sehr geringem Druck zu befüllen, beispielsweise im Bereich von 1 bar. Der Fahrreifen 214 kann dadurch eine sehr hohe Traktion bereitstellen, ohne dass befürchtet werden muss, dass sich bei der zu erwartenden starken Verformung des Fahrreifens 214 die Reifenwülste 220, 222 von der Felge 210 lösen.

Darüber hinaus bietet der Innenreifen 228 einen hohen Schutz gegen das sogenannte Durchschlagen des Fahrreifens 214. Wird die Lauffläche 216 des Fahrreifens 214 beispielsweise beim Überfahren einer Kante stark nach innen in Richtung auf die Felge 210 gedrückt, so wird diese Bewegung spätestens dann gestoppt, wenn die Innenseite des Fahrreifens 214 unterhalb der Lauffläche 216 an der Oberseite des Innenreifens 228 anliegt. Es wird bei der erfindungsgemäßen Reifenanordnung 212 dadurch verhindert, dass die Innenseite des Fahrreifens 214 auf die Oberseiten der Felgenhörner durchschlägt und dadurch Schaden und Druckverlust erleidet.

Die Darstellung der Fig. 23 zeigt eine weitere Schnittansicht der Reifenan-ordnung 212 auf der Fahrradfelge 210. Fig. 23 zeigt dabei einen Schnitt in einem Bereich entfernt von dem Ventil 238. Zu erkennen sind in der Felge 210 eine innere Speichenbohrung 254 und eine äußere Speichenbohrung 256. Weiter ist zu erkennen, dass die Unterseite 236 des Schlauchs 233 in den Bereichen entfernt vom Ventil 38 nicht mit quer verlaufenden Nuten versehen ist. Entfernt von dem Ventil 238 sind dadurch keine Luftkanäle 246 zwischen der Felge 210 und der Unterseite 236 des Schlauchs 233 gebildet, die in diesem Bereich ja auch nicht erforderlich sind. Die Unterseite 236 kann in den Bereichen entfernt von dem Ventil 238 dadurch weniger dick ausgeführt sein als im Bereich des Ventils 238 aber dennoch stabil genug für die auftretende Druckbelastung. Dadurch kann Gewicht eingespart werden.

Wie Fig. 23 zu entnehmen ist, ist in Bereichen entfernt vom Ventil 238 auch der Innenreifen 228 nicht mit den Rippen 252 versehen. Außerhalb des Bereichs des Ventils 238 sind die Rippen 252 nicht erforderlich, da außerhalb des Bereichs des Ventils 238 ja auch kein Luftkanal zwischen den Reifenwülsten 230, 232 des Innenreifens 228 und den Reifenwülsten 220, 222 des Fahrreifens 214 bereitgestellt werden muss. Auch dadurch kann Gewicht eingespart werden.

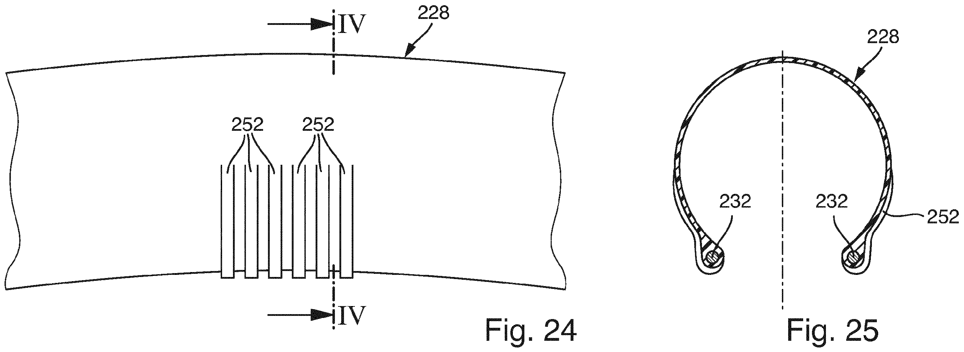

Die Darstellung der Fig. 24 zeigt eine schematische Seitenansicht des Innenreifens 228 der Reifenanordnung 212 der Fig. 22. Insgesamt sind sechs Rippen 252 gleichmäßig voneinander beabstandet in Umfangsrichtung des Innenreifens 228 nebeneinander angeordnet. Die Rippen 252 sind in Umfangsrichtung gesehen dabei genauso breit wie die Zwischenräume zwischen den Rippen 252. Da ja der Innenreifen 228 und auch der Fahrreifen 214 elastisch sind, kann dadurch sichergestellt werden, dass zwischen jeweils zwei Rippen 252 ein Luftkanal gebildet ist, um, siehe Fig. 22, den Zwischenraum 234 zwischen dem Innenreifen 228 und dem Fahrreifen 214 befüllen zu können. Die Zwischenräume zwischen den Rippen 252 können dabei eine andere Breite aufweisen als der Luftkanal 246 in der Unterseite des Schlauchs 233, um einen Durchgang zum Innenraum 234 sicherzustellen.

Die Darstellung der Fig. 25 zeigt eine Schnittansicht auf die Schnittebene IV-IV in Fig. 24. Zu erkennen ist die Ausbildung der Rippen 252, die ausgehend von den einander zugewandten Bereichen der Reifenwülste 230, 232 ausgehen und dann in ihrer Höhe zunehmen, bis sie etwa auf halber Höhe der Seitenwand des Innenreifens 228 wieder allmählich in die Außenfläche des Innenreifens 228 übergehen. Eine solche Gestaltung der Rippen 252 stellt zuverlässig einen Luftkanal zwischen dem Innenreifen 228 und dem Fahrreifen 214, siehe Fig. 22, zur Verfügung.

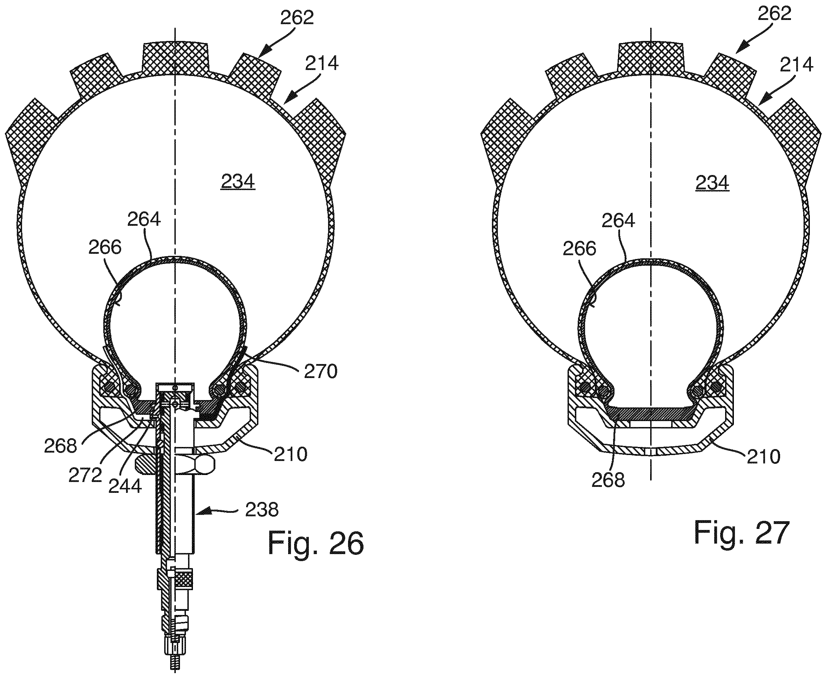

Die Darstellung der Fig. 26 zeigt eine Reifenanordnung 262 gemäß einer weiteren Ausführungsform auf einer Fahrradfelge 210. Im Folgenden werden lediglich die Unterschiede zu der Ausführungsform der Reifenanordnung 212 in Fig. 22 beschrieben.

Im Unterschied zu dem Innenreifen 228 der Fig. 22 ist der Innenreifen 264 der Reifenanordnung 262 der Fig. 26 nicht mit den Rippen 252 versehen. Auch der Schlauch 266 weist eine Unterseite 268 auf, die im Wesentlichen über den gesamten Umfang des Schlauchs 266 eine konstante Dicke aufweist. Um einen Luftkanal zwischen der Felge 210 und der Unterseite 268 des Schlauchs bereitzustellen, ist ein Einlageteil 270, beispielsweise aus Kunststoff, vorgesehen. Das Einlageteil 270 weist eine durchgehende Nut auf und bildet dadurch einen Luftkanal 272 zwischen der Unterseite 268 des Schlauchs 266 und der Felge 210. Das Einlageteil 270 ist allgemein U-förmig ausgebildet und weist auch eine Durchgangsöffnung für das Zweiwegeventil 238 auf. Die Durchgangsöffnungen 244 des Zweiwegeventils 238 münden dabei in den Luftkanal 272, der durch das Einlegeteil 270 gebildet ist. Das Einlegeteil 270 erstreckt sich dabei bis in den Zwischenraum 234 zwischen dem Fahrreifen 214 und dem Innenreifen 264. Hierzu weist das Einlageteil 270 zwei Schenkel auf, die zwischen den Reifenwülsten des Fahrreifens 214 und den Reifenwülsten des Innenreifens 264 angeordnet werden. In der Darstellung der Fig. 26 weist das Einlageteil 270 lediglich einen Luftkanal 272 auf. Ein spiegelbildlich ausgebildeter Luftkanal kann aber in gleicher Weise auch auf der rechten Seite des Einlageteils 270 in Fig. 26 ausgebildet sein.

Die Darstellung der Fig. 27 zeigt einen Schnitt durch die Reifenanordnung 262 entfernt von dem Ventil 238. Das Einlageteil 270 erstreckt sich lediglich über eine kurze Umfangslänge. In Abstand von dem Einlageteil 270 liegt dann die Unterseite 268 des Schlauchs 266 unmittelbar auf der Felge 210 auf und dichtet hier zur Felge ab. Auch die Reifenwülste des Innenreifens 264 liegen flächig an den Innenseiten der Reifenwülste des Fahrreifens 214 an.

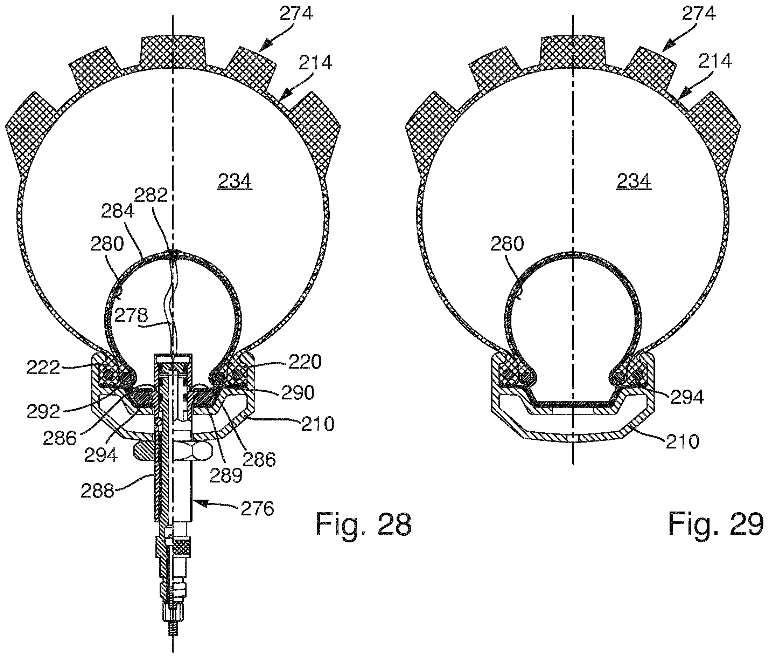

Die Darstellung der Fig. 28 zeigt eine Schnittansicht einer weiteren Reifenanordnung 274 auf einer Fahrradfelge 210. Erneut werden lediglich die Unterschiede zu der Reifenanordnung 212 der Fig. 22 erläutert.

Die Reifenanordnung 274 weist ein Zweiwegeventil 276 auf, das zwar im Prinzip gleich zu dem Zweiwegeventil 238 der Fig. 22 aufgebaut ist, dessen in Fig. 28 obere Auslassöffnung aber mit einem flexiblen Schlauch 278 verbunden ist, der einen Schlauch 280 durchquert und an seinem dem Zweiwegeventil 276 gegenüberliegenden Ende mit einer Hülse 282 verbunden ist. Die Hülse 282 durchsetzt sowohl die Wandung des Schlauchs 280 als auch die Wandung eines Innenreifens 284. Die Hülse 282 weist eine Durchgangsbohrung auf und bildet dadurch einen Kanal durch die Wandung des Schlauchs 280, der im Innenraum des Innenreifens 284 angeordnet ist, und durch die Wandung des Innenreifens 284 führt.

Über den flexiblen Schlauch 278 und die Hülse 282 kann somit der Zwischenraum 234 zwischen dem Fahrreifen 214 und dem Innenreifen 284 befüllt werden. In einer zweiten Stellung des Zweiwegeventils 276 kann der Schlauch 280 dann über Durchgangsöffnungen 286 in einem Ventilgehäuse 88 befüllt werden. Der Schlauch 280 ist mit einem Ventilfuß oder einer Ventilverstärkung 289 versehen, an der das Zweiwegeventil 276 befestigt ist.

Die Reifenanordnung 274 der Fig. 28 kommt somit ohne Luftkanäle der Felge und der Ventilverstärkung 289 und auch ohne Luftkanäle zwischen den Reifenwülsten 220, 222 des Fahrreifens 214 und den Reifenwülsten 290, 292 des Innenreifens 284 aus. Stattdessen wird mit dem flexiblen Schlauch 278 und der Hülse 282 ein Luftkanal von dem Ventilgehäuse 288 durch die Wandung des Schlauchs 280 und die Wandung des Innenreifens 284 hindurch in den Zwischenraum 234 bereitgestellt. Der Innenraum 234 kann somit unabhängig von dem Schlauch 280 befüllt werden. Speziell kann der Schlauch 280 auf einen hohen Druck, beispielsweise etwa 6 bar bis 8 bar aufgepumpt werden und der Innenraum 234 auf einen niedrigen Druck, beispielsweise lediglich 0,5 bar bis 1 bar.

Die Darstellung der Fig. 29 zeigt eine Ansicht auf eine Schnittebene der Reifenanordnung 274 der Fig. 28 entfernt von dem Bereich des Zweiwegeventils 276. Es ist zu erkennen, dass in diesem Bereich lediglich noch ein Felgenband 294 zwischen der Felge 210 und dem Schlauch 280 angeordnet ist, wobei sich dieses Felgenband im Übrigen um den gesamten Umfang der Felge 210 erstreckt. Die Ventilverstärkung 89 ist in Bereichen entfernt von dem Zweiwegeventil 276 aber nicht mehr vorhanden. Das Felgenband 294 dichtet die Speichenbohrungen ab und wirkt an dem Ventil 288 als Dichtung zwischen Ventil 288 und Felge 210.

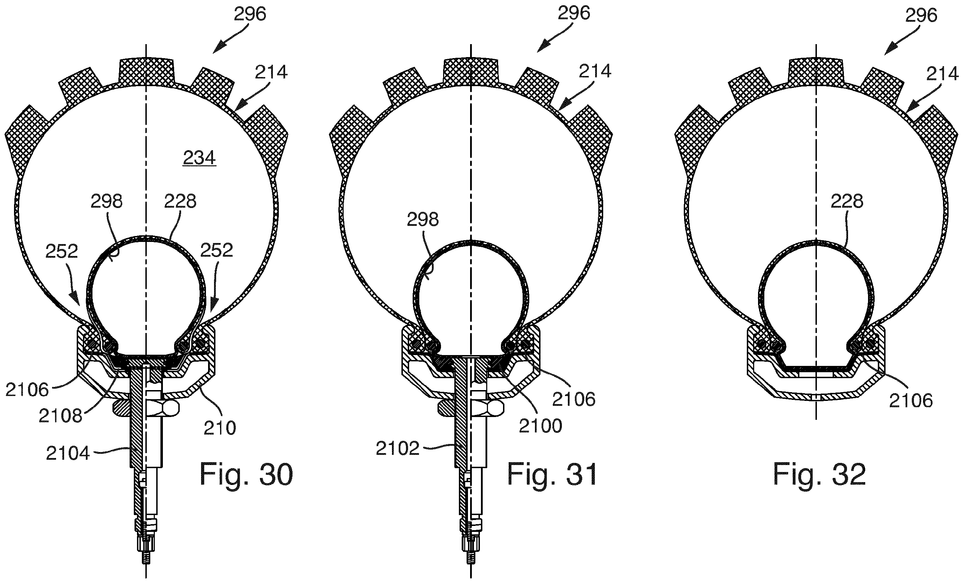

Die Darstellung der Fig. 30 zeigt eine Reifenanordnung 296 gemäß einer weiteren Ausführungsform. Die Reifenanordnung 296 weist den Fahrreifen 214 und den Innenreifen 228 auf, wie sie bereits anhand der Fig. 22 erläutert wurden. Lediglich der Vollständigkeit halber sei bemerkt, dass der Reifen 228 die Vorsprünge 252 aufweist, die, wie bereits erläutert wurde, Luftkanäle zwischen dem Innenreifen 228 und dem Fahrreifen 214 bereitstellen, über die der Innenraum 234 zwischen dem Innenreifen 228 und dem Fahrreifen 214 befüllt werden kann. Innerhalb des Innenreifens 228 ist ein Schlauch 298 angeordnet, der, siehe Fig. 31, mit einer an und für sich konventionellen Ventilverstärkung 1200 und einem ebenfalls konventionellen Ventil 2102 versehen ist. Über das Ventil 2102 kann der Schlauch 298 mit Luft befüllt werden.

Die Reifenanordnung der Fig. 30 und Fig. 31 weist somit zwei Ventile auf, nämlich das Ventil 2102, um den Schlauch 298 zu befüllen und ein Ventil 2104, um den Zwischenraum 234 zwischen dem Innenreifen 228 und dem Fahrreifen 214 zu befüllen. Die beiden Ventile 2102, 2104 sind räumlich voneinander beabstandet angeordnet, beispielsweise um 180° versetzt an der Felge 120. Wie Fig. 30 und Fig. 31 zu entnehmen ist, ist zwischen der Felge 210 und dem Schlauch 298 ein Felgenband 2106 angeordnet, das, siehe Fig. 30, im Bereich des Ventils 2104 verdickt ausgebildet ist, wobei in diesem verdickten Bereich das Ventil 2104 befestigt ist und gleichzeitig eine in Querrichtung verlaufende Nut 2108 vorgesehen ist, die einen Luftkanal von einer Auslassöffnung des Ventils 2104 zwischen der Unterseite des Schlauchs 298 und dem Nutgrund in der Verdickung des Felgenbands 2106 bildet. Dieser Luftkanal 2108 führt vom Ventil 2104 aus nach links bzw. rechts und geht dort in die Luftkanäle über, die zwischen den Reifenwülsten des Innenreifens 228 und den Reifenwülsten des Fahrreifens 214 zwischen den Vorsprüngen 252 gebildet sind. Mittels des Ventils 2104 kann somit über die Luftkanäle 2108 und die Luftkanäle zwischen den Vorsprüngen 252 der Zwischenraum 234 zwischen dem Innenreifen 228 und dem Fahrreifen 214 unabhängig von dem Schlauch 298 befüllt werden.

Die Darstellung der Fig. 32 zeigt einen weiteren Schnitt durch die Reifenanordnung 296 der Fig. 30 und 31. Die Schnittebene der Fig. 32 liegt entfernt von den beiden Ventilen 2102, 2104. Es ist zu erkennen, dass entfernt von den Ventilen 2102, 2104 das Felgenband 2106 keine Verdickung mehr aufweist sondern eine über die Breite des Felgenbandes 2106 durchgehende konstante Materialstärke. Das Felgenband 2106 wirkt als Dichtung an den Speichenbohrungen und an den Ventilen 2102, 2104. Auch der Innenreifen 228 ist entfernt von dem Ventil 2104 nicht mehr mit Vorsprüngen 252 versehen. Durch diese Maßnahmen kann Gewicht eingespart werden, da sowohl die Verdickung des Felgenbands 2106 nur in dem Bereich vorhanden ist, in dem das Ventil 2104 sitzt und der Luftkanal 2108 benötigt wird, und auch die Vorsprünge 252 an dem Innenreifen 228 nur im Bereich des Ventils 2104 vorhanden sind. Auch die Ventilverstärkung 2100 des Schlauchs 298 ist lediglich in dem Bereich vorhanden, in dem das Ventil 2102 angeordnet ist.

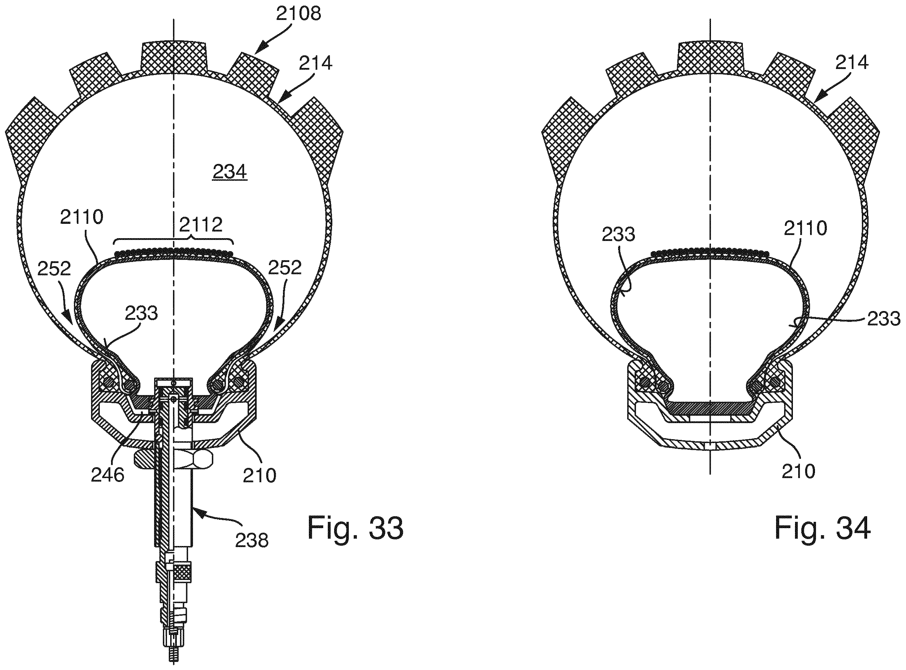

Die Darstellung der Fig. 33 zeigt eine Schnittansicht einer Reifenanordnung 2108 gemäß einer weiteren Ausführungsform. Der Fahrreifen 214 ist gegenüber der Ausführungsform der Fig. 22 unverändert, wie auch die Felge 210 und das Zweiwegeventil 238 sowie der Schlauch 233. Ein Innenreifen 2110 ist in Bezug auf seine äußere Form anders aufgebaut als der Innenreifen 228 der Fig. 22, speziell ist der Innenreifen 2110 als Gürtelreifen ausgebildet und weist im Bereich seines größten Durchmessers 2112, wobei dieser Bereich in der Fig. 33 mit einer geschweiften Klammer bezeichnet ist, einen lediglich schematisch angedeuteten Gewebegürtel auf. Dieser Gewebegürtel im Bereich 2112 führt dazu, dass der Innenreifen 2110 im Bereich 2112 eine Krümmung mit sehr großem Radius aufweist und annähernd eine ebene Fläche im Bereich 2112 bereitstellt. Dadurch liegen die seitlich des Bereichs 2112 gelegenen Seitenwände des Innenreifens 2110 weiter außen und somit näher an der Innenseite des Fahrreifens 214. Bei großen Belastungen des Fahrreifens 214, beispielsweise durch Schläge oder bei schnellen Kurvenfahrten, kann sich der Fahrreifen 214 somit auf dem Innenreifen 2110 abstützen. Dies führt zu positiven Einflüssen auf das Fahrverhalten des Fahrreifens 214 sowie auch zu erhöhter Sicherheit.

Um den Zwischenraum 234 zwischen dem Innenreifen 2110 und dem Fahrreifen 214 befüllen zu können, ist der Innenreifen 2110 wie der Innenreifen 228 der Fig. 22 mit den Vorsprüngen 252 versehen. Auch der Luftkanal 246 zwischen der Felge 210 und der Unterseite des Schlauchs 233 wurde anhand der Reifenanordnung 212 der Fig. 22 ja bereits erläutert.

Fig. 34 zeigt eine Schnittansicht der Reifenanordnung 2108 entfernt von dem Zweiwegeventil 238.

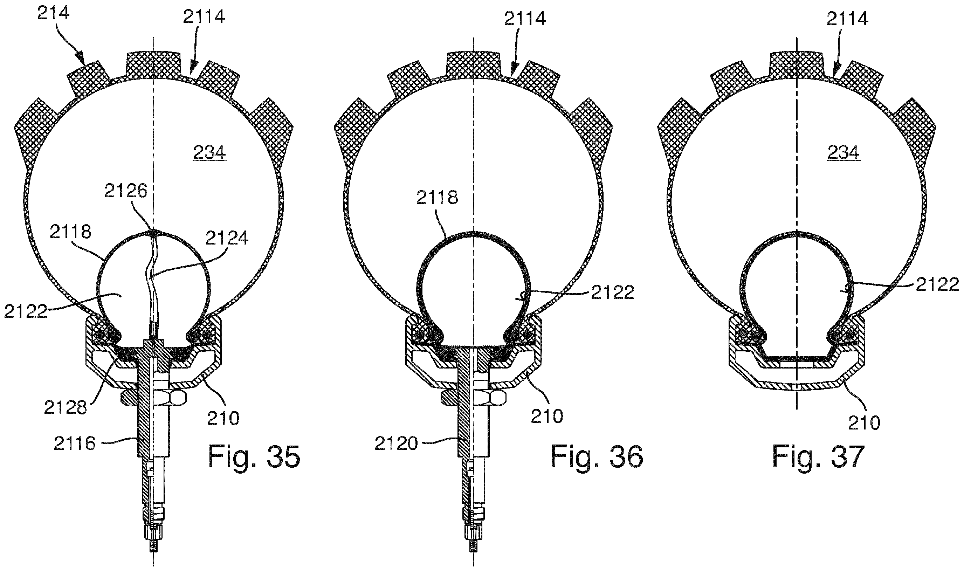

Die Darstellung der Fig. 35 zeigt eine weitere Reifenanordnung 2114 auf einer Fahrradfelge 210. Die Reifenanordnung 2114 weist den Fahrreifen 214 auf sowie ein erstes Ventil 2116 zum Befüllen des Zwischenraums 234 zwischen einem Innenreifen 2118 und dem Fahrreifen 214. Darüber hinaus weist die Reifenanordnung 2114, siehe Fig. 36, ein zweites Ventil 2120 auf, um einen Schlauch 2122 innerhalb des Innenreifens 2118 zu befüllen.

Von dem ersten Ventil 2116 führt ein flexibler Schlauch 2124 zu einer Hülse 2126 in der Wand des Innenreifens 2118. Die Hülse 2126 stellt einen Kanal durch die Wand des Innenreifens 2118 bereit. Über den flexiblen Schlauch 2124 und die Hülse 2126 kann somit mittels des Ventils 2116 der Zwischenraum 234 zwischen dem Innenreifen 2118 und dem Fahrreifen 214 befüllt werden. Das Ventil 2116 ist in einem verdickten Abschnitt 2128 eines Felgenbands befestigt, das sich um den gesamten Umfang der Felge 210 erstreckt, in Bereichen, die entfernt von dem Ventil 2116 liegen, siehe Fig. 36 und Fig. 37, aber eine konstante und geringe Dicke aufweist und als Dichtung wirkt.

Der Schlauch 2122 ist, siehe Fig. 36, mit einer Ventilverstärkung versehen, an der das Ventil 2120 befestigt ist.

Der Schlauch 2122 ist als Schlauch mit zwei geschlossenen Enden ausgebildet. Der Schlauch 2122 ist in der Ansicht der Fig. 35 daher in einer Sicht auf ein erstes geschlossenes Ende zu erkennen. Der Schlauch 2122 wird so auf die Felge 210 aufgelegt, dass der flexible Schlauch 2124 zwischen den beiden Enden des Schlauchs 2122 angeordnet ist. Ein Schlauch nach der Art des Schlauchs 2122 mit zwei Enden wird auch als sogenannter "open tube" bezeichnet. Bei entsprechender Gestaltung der Enden des Schlauchs 2122, so dass diese zwischen sich einen Luftkanal bilden, kann der flexible Schlauch 2124 entfallen.

Die Darstellung der Fig. 37 zeigt einen weiteren Schnitt durch die Reifenanordnung 2114 entfernt von den Ventilen 2116 und 2120. Wie zu erkennen ist, ist entfernt von den Ventilen 2116 und 2120 lediglich noch das Felgenband zwischen der Felge 210 und dem Schlauch 2122 angeordnet.

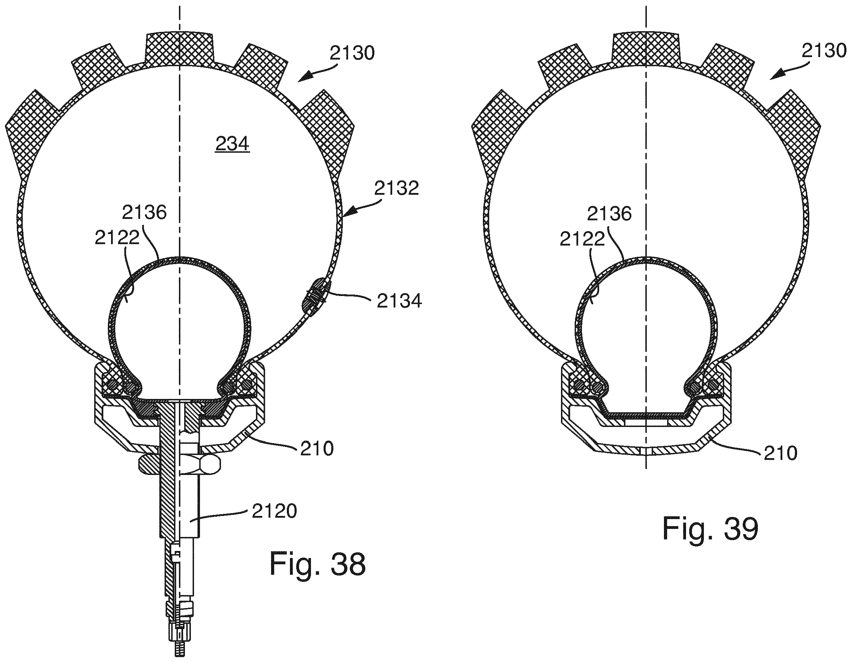

Die Darstellung der Fig. 38 zeigt eine weitere Reifenanordnung 2130 auf der Felge 210. Ein Fahrreifen 2132 ist in seiner Seitenwand mit einem Ventil 2134 versehen, über das der Zwischenraum 234 zwischen dem Fahrreifen 2132 und einem Innenreifen 2136 unmittelbar befüllt werden kann. Das Ventil 2134 ist äußerst kompakt und insbesondere mit sehr geringer Höhe ausgebildet. Das Ventil 2134 ist in eine Durchgangsöffnung in der Wand des Fahrreifens 2132 eingesetzt und dort beispielsweise eingeklebt oder einvulkanisiert. Da der Zwischenraum 234 lediglich mit einem sehr geringen Druck, beispielsweise 0,5 bar, befüllt wird, kann das Ventil 2134 wesentlich kompakter ausgebildet sein als das konventionelle Ventil 2120 zum Befüllen des konventionell ausgebildeten Schlauchs 2122. Speziell erstreckt sich das Ventil 2134 lediglich um eine sehr geringe Strecke in den Zwischenraum 234 hinein. Das Ventil 2134 kann beispielsweise auch vollständig aus elastischem Kunststoff oder elastischem Gummi bestehen. Auch ist das Ventil 2134 in einem Bereich der Seitenwand des Fahrreifens 132 angeordnet, der bereits wieder der Felge 210 zugewandt ist. Wenn man auf den in Fig. 38 dargestellten Querschnitt des Fahrreifens 2132 ein Zifferblatt einer Uhr auflegt, so wäre das Ventil 2134 etwa bei vier Uhr angeordnet. Die Anordnung des Ventils 2134 kann zwischen etwa drei Uhr und fünf Uhr liegen. Aufgrund der speziellen, sehr kompakten und flachen Ausbildung des Ventils 2134 sowie der Anordnung des Ventils 2134 stört dieses im Fahrbetrieb nicht.

Der Innenreifen 2136 hält den Schlauch 2122 an der Felge 210 und drückt, wie bereits beschrieben wurde, mit seinen Reifenwülsten nach außen gegen die Innenseiten der Reifenwülste des Fahrreifens 2132, so dass diese wiederum gegen die Felgenhörner gedrückt werden und den Fahrreifen 2132 dadurch auf der Felge 210 sichern. Zwischen den Reifenwülsten des Innenreifens 2136 und den Reifenwülsten des Fahrreifens 2132 sind keine Luftkanäle vorgesehen, da ja der Zwischenraum 34 zwischen dem Innenreifen 2136 und dem Fahrreifen 2132 unmittelbar über das Ventil 2134 befüllt wird.

Die Darstellung der Fig. 39 zeigt einen Schnitt durch die Reifenanordnung 2130 entfernt von dem Ventil 2120.

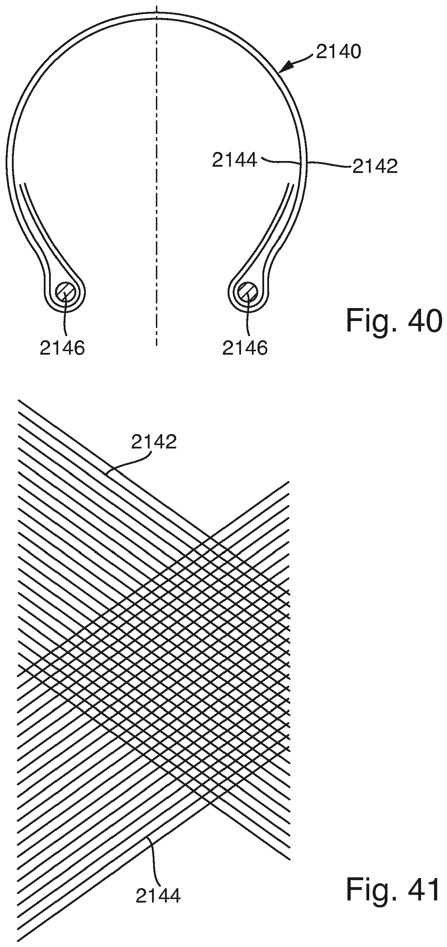

Die Darstellung der Fig. 40 zeigt eine schematische Schnittansicht eines Innenreifens 2140 für eine erfindungsgemäße Reifenanordnung. Die Darstellung der Fig. 40 dient zur Verdeutlichung der Anordnung von Karkassenlagen in dem Innenreifen 2140. Eine Gummierung der Karkassenlagen, die ja üblicherweise in Gummimaterial eingebettet sind, ist in Fig. 40 daher nicht dargestellt.

Es bleibt aber festzuhalten, dass die Innenreifen bei der erfindungsgemäßen Reifenanordnung grundsätzlich ohne eine Gummierung des Gewebes ausgeführt werden können. Die Innenreifen der erfindungsgemäßen Reifenanordnung können luftdurchlässig ausgebildet sein, da ihre Aufgabe lediglich darin besteht, den innerhalb des Innenreifens angeordneten Schlauch auf der Felge 210 zu halten und den Innendruck des Schlauchs nach außen auf die Innenseiten der Reifenwülste der Fahrreifens zu übertragen, um diese dann wiederum gegen die Felgenhörner zu drücken. Es ist im Rahmen der Erfindung daher durchaus möglich und vorgesehen, den Innenreifen 2140 ausschließlich aus Cordgewebe aufzubauen oder das Cordgewebe des Innenreifens 2140 lediglich abschnittsweise in Gummi oder elastisches Material einzubetten. Dies gilt auch für die bereits beschriebenen Ausführungsformen von Innenreifen für erfindungsgemäße Reifenanordnungen sowie auch für die noch folgenden zu beschreibenden Innenreifen.

Der Innenreifen 2140 weist zwei Karkassenlagen 2142 und 2144 auf, die von außen her um Wulstverstärkungen 2146 nach innen oder außen umgeschlagen sind. Eine solche Konstruktion wird als Turn-up-Konstruktion bezeichnet.

Fig. 41 zeigt die Ausrichtung der Fäden in den Karkassenlagen 2142, 2144. Zu erkennen ist, dass die Fäden der Karkassenlage 2142 in einem Winkel von etwas weniger als 90° zu den Gewebefäden der Karkassenlage 2144 angeordnet sind, bezogen auf den in Fig. 41 rechts bzw. links zwischen den jeweiligen Fäden eingeschlossenen Winkel. Der Winkel kann zwischen 60° und 120° betragen.

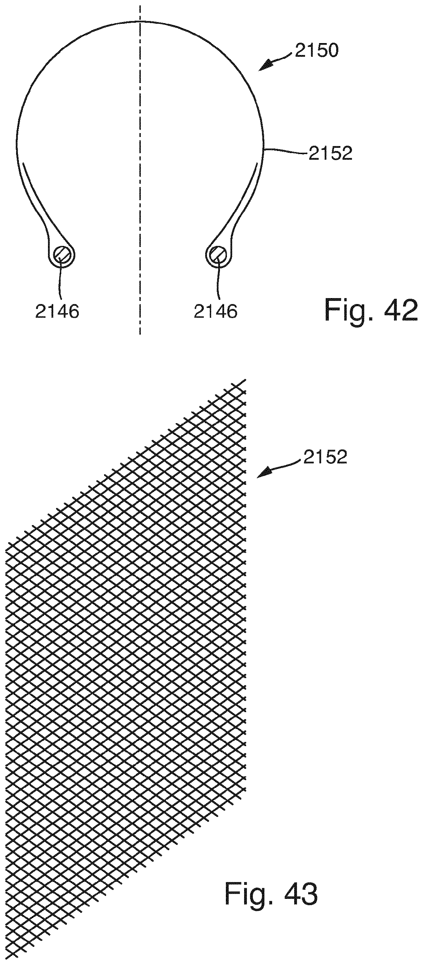

Die Darstellung der Fig. 42 zeigt schematisch einen weiteren Innenreifen 2150 für eine erfindungsgemäße Reifenanordnung. Der Innenreifen 2150 weist lediglich ein Kreuzgewebe 2152 auf, die, siehe Fig. 43, aus Gewebefäden besteht, die in einem Winkel von etwas weniger als 90° gekreuzt sind, wobei der Winkel zwischen 60° und 120° betragen kann. Das Kreuzgewebe 2152 wird von außen oder innen her um die Wulstkerne 2146 geschlagen und auf der Innenseite oder Außenseite wieder ein Stück nach oben geführt.

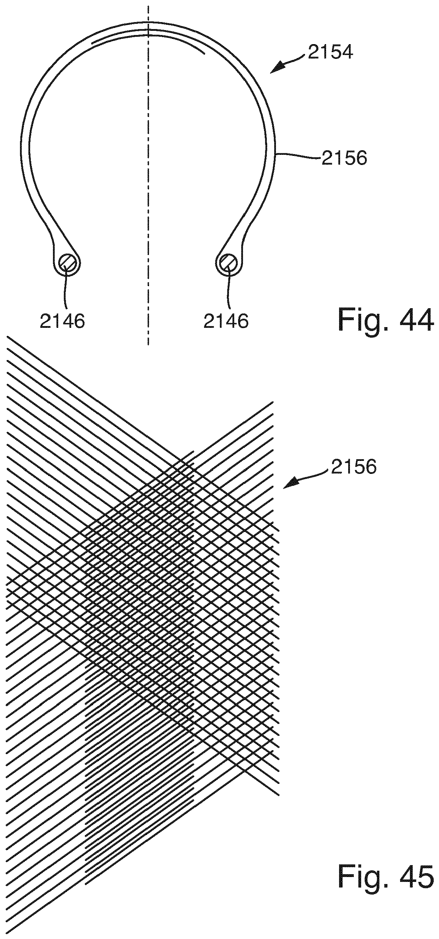

Die Darstellung der Fig. 44 zeigt einen weiteren Innenreifen 2154 in schematischer Darstellung. Der Innenreifen 2154 ist mit zwei Karkassenlagen versehen, die jedoch durch ein einziges Cordgewebestück 2156 gebildet sind. Das Cordgewebestück 2156 wird von außen her um die Wulstverstärkungen 2146 nach innen oder außen umgeschlagen und dann aber so weit nach oben geführt, bis sich die Enden des Cordgewebestücks 2156 im Bereich des größten Durchmessers des Reifens, also unterhalb der Lauffläche, ein Stück weit überlappen. Im Bereich der Lauffläche liegen somit drei Cordgewebelagen übereinander, im Bereich der Seitenwände lediglich zwei Cordgewebelagen.

Fig. 45 stellt schematisch die Ausrichtung der Karkassenfäden in der Karkasse 2156 dar. Gut zu erkennen ist mittig der Überlappungsbereich, in dem die beiden Enden des Gewebes 2156 unterhalb der Lauffläche überlappt sind. Ein solcher Aufbau des Innenreifens 2154 wird als French-Former-Konstruktion bezeichnet.

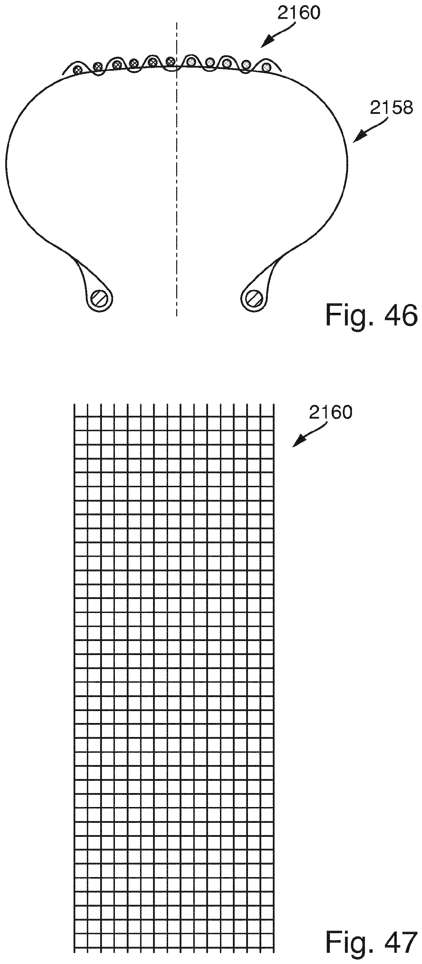

Die Darstellung der Fig. 46 zeigt einen Innenreifen 2158 für die erfindungsgemäße Reifenanordnung in schematischer Darstellung. Der Reifen 2158 ist, wie der Innenreifen 2110 der Fig. 33, als Gürtelreifen aufgebaut und weist im Bereich seines größten Durchmessers einen Gewebegürtel 2160 auf. Der Gewebegürtel 2160 besteht aus in Umfangsrichtung umlaufenden Fäden sowie senkrecht hierzu angeordneten Gewebefäden, siehe Fig. 47. Das Gewebe 2160 wird als Kreuzgewebe bezeichnet.

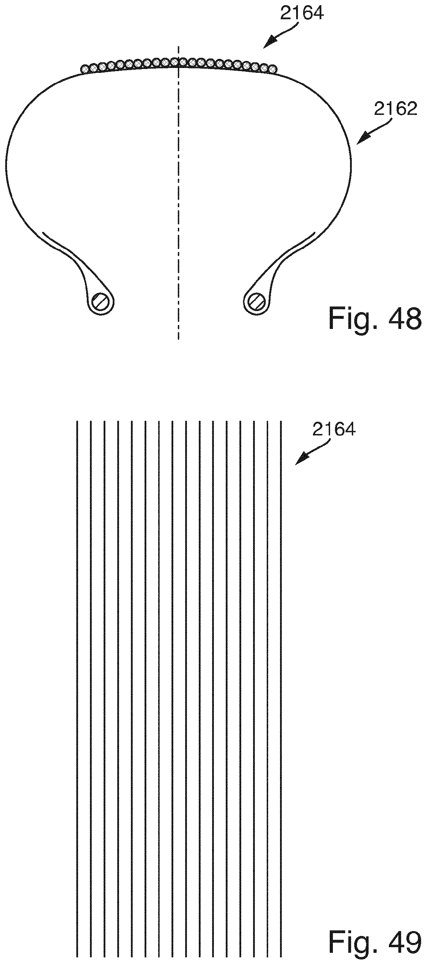

Die Darstellung der Fig. 48 zeigt schematisch einen weiteren Innenreifen 2162 für eine erfindungsgemäße Reifenanordnung. Auch der Reifen 2162 ist als Gürtelreifen ausgebildet und weist im Bereich seines größten Durchmessers einen Gewebegürtel 2164 auf. Der Gewebegürtel 2164 besteht lediglich aus einem Faden, der in Umfangsrichtung umläuft. Der Gürtel 2164 wird als Null-Grad-Gürtel bezeichnet.

Um die Montage des Reifenanordnung 212 zu erleichtern, können die Reifenwülste 230, 232 des Innenreifens 228 und die Reifenwülste 220, 222 des Fahrreifens 212 miteinander verbunden sein, beispielsweise miteinander vernäht sein. Dies erleichtert die korrekte Ausrichtung des Innenreifens 228 zu dem Fahrreifen 214. Zweckmäßigerweise können in einem solchen Fall, wenn also der Innenreifen 228 mit dem Fahrreifen 214 vernäht ist, die Reifenwülste 230, 232 des Innenreifens 228 oder des Fahrreifens 214 sogar vollständig entfallen. Wenn der Innenreifen 228 mit den Reifenwülsten des Fahrreifens 214 vernäht ist, so sorgen die Reifenwülste 220, 222 des Fahrreifens 214 dafür, dass der Innenreifen 228 den Schlauch 233 zuverlässig auf der Felge hält. Die Reifenanordnung kann dadurch sehr leicht ausgebildet werden. Der Innenreifen 228 oder der Fahrreifen 214 kann mit den Reifenwülsten des Fahrreifens beziehungsweise des Innenreifens vernäht oder verklebt sein oder beispielsweise auch anvulkanisiert werden.

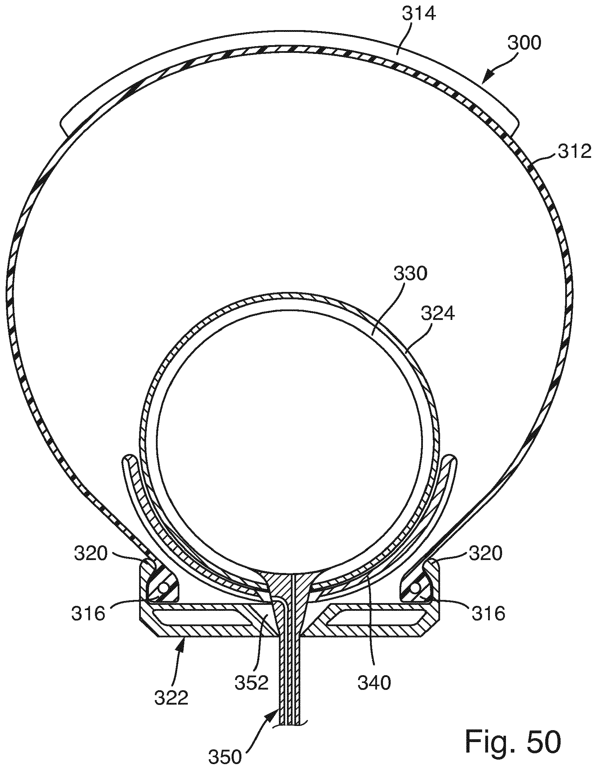

Die Darstellung der Figur 50 zeigt in schematischer Schnittansicht eine erfindungsgemäße Reifenanordnung 300 gemäß einer weiteren Ausführungsform der Erfindung. Die Reifenanordnung weist einen Fahrreifen 312 auf, der für den schlauchlosen Betrieb geeignet und somit als sogenannter Tubeless-Reifen oder Tubeless Ready-Reifen ausgebildet ist. Der Fahrradreifen 312 weist eine Lauffläche 314 und zwei Reifenwülste 316 auf, wobei die Reifenwülste 316 im dargestellten montierten Zustand an der Innenseite der Felgenhörner 320 der Felge 322 anliegen. Ein Innenreifen 324 ist als sogenannter Schlauchreifen ausgebildet und weist somit eine torusartige Form auf. Innerhalb des Innenreifens 324 ist ein ebenfalls torusförmiger Schlauch 330 angeordnet. Der Innenreifen 324 ist bspw. vernäht und weist wenigstens eine druckresistente Textillage auf. Diese Textillage kann zweckmäßigerweise gummiert sein. Der Innenreifen 324 weist aber keine Lauffläche auf und kann dadurch sehr leicht ausgeführt werden.

Zwischen dem Innenreifen 324 und der Felge 322 ist ein Einlageteil 340 vorgesehen, das prinzipiell gleich ausgebildet ist wie das in den Figuren 5 bis 8 dargestellte Einlageteil 40. Das Einlageteil 340 weist im Unterschied zum Einlageteil 40 auf beiden Seiten ausgebildete Rippen auf, so dass auf beiden Seiten eines Zweiwegeventils 350 ein Luftkanal zwischen dem Innenreifen 324 und der Felge 322 sowie zwischen dem Innenreifen 324 und dem Fahrreifen 312 gebildet ist.

Es ist dabei festzustellen, dass die Darstellung der Figur 50 lediglich schematisch ist. Im montierten und befüllten Zustand wird der Schlauch 330 mit einem Luftdruck von bspw. 10 bar befüllt. Der Schlauch 330 und der Innenreifen 324 werden dann gegen die Felge 322 gedrückt und halten dadurch auch das Einlageteil 340 fest gegen die Felge bzw. den Fahrreifen 312 gedrückt. In Umfangsbereichen, die außerhalb des Einlageteils 340 liegen, drückt der Innenreifen 324 die Wülste 316 des Fahrreifens 312 gegen die Innenseiten der Felgenhörner 320 und hält den Fahrreifen 312 dadurch sicher auf der Felge 322.

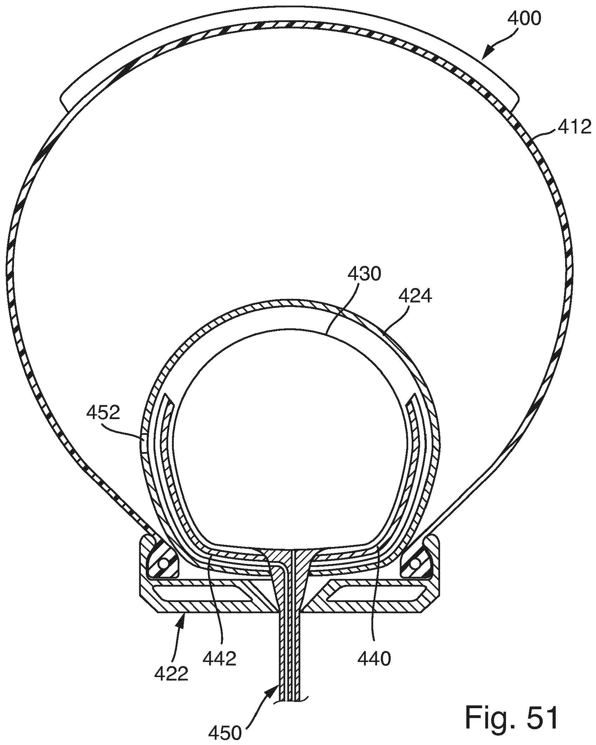

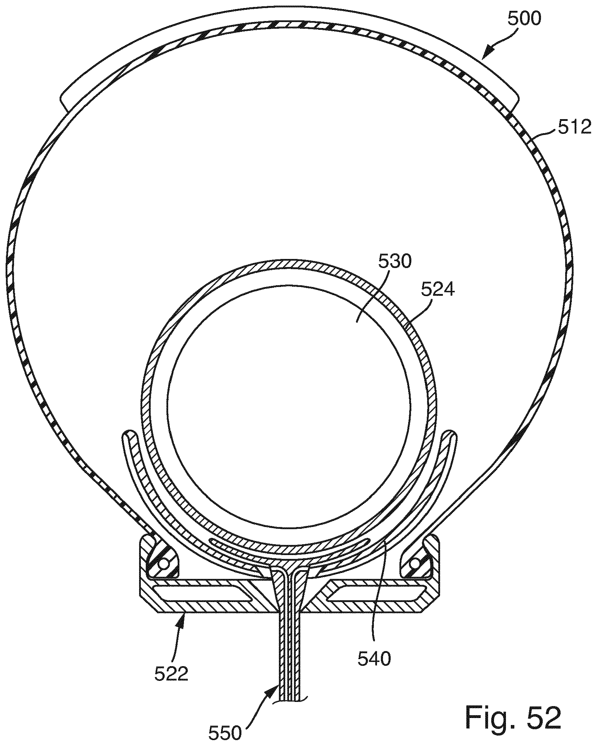

Mittels des Zweiwegeventils kann der Zwischenraum zwischen der Felge 322 und dem Fahrreifen 312 dadurch mit vergleichsweise niedrigen Druck, insbesondere 3 bar bis 3,5 bar, befüllt werden, ohne das zu befürchten wäre, dass sich die Reifenwülste 316 von den Felgenhörnern 320 lösen. Die Darstellung der Figur 50, die ja einen Zwischenraum zwischen dem Einlageteil 340 und dem Fahrreifen 312 zeigt, ist somit lediglich schematisch zu verstehen. Dies gilt auch für die Darstellungen der Figur 51 und 52.

Vor dem Montieren der Reifenanordnung 300 wird zunächst dafür gesorgt, dass nicht dargestellte Speichenbohrungen der Felge 320 luftdicht abgedichtet sind. Eine Ventilbohrung 352 in der Felge 322 wird dadurch abgedichtet, dass das Ventil 350 mit einem passenden Dichtkonus versehen ist, so dass durch die Ventilbohrung 352 keine Luft entweichen kann. Zunächst wird dann der Fahrreifen 312 mit einem der Wülste 316 auf die Felge 322 montiert. Nachfolgend wird der Schlauchreifen, der aus dem Innenreifen 324 und dem Schlauch 330 besteht, mit dem über das Ventil 350 geschobenen Einlageteil auf der Felge angeordnet. Abschließend wird der zweite Reifenwulst 316 auf die Felge 322 montiert. In diesem Zustand kann nun, je nach Stellung des Zweiwegeventils 350, entweder der Schlauch 330 oder der Zwischenraum zwischen der Felge 322 und dem Fahrreifen 312 befüllt werden. Der Durchmesser der Schlauchreifens verringert sich üblicherweise beim Aufpumpen und fixiert auch dadurch den Fahrreifen 312.

Die schematische Darstellung der Figur 51 zeigt eine weitere erfindungsgemäße Reifenanordnung 400. Die Reifenanordnung 400 ist sehr ähnlich zu der Reifenanordnung 300 der Figur 50 aufgebaut und funktionsgleiche und identische Teile werden nicht erneut beschrieben. Im Unterschied zur Reifenanordnung 300 ist ein Einlageteil 40 zwischen einem Schlauch 430 und einem Innenreifen 424 angeordnet. Das Einlageteil 440 wird somit beim Herstellen eines Schlauchreifens aus dem Innenreifen 424 und dem Schlauch 430 zusammen mit dem Schlauch 430 im Innenreifen 424 angeordnet, wobei der Innenreifen 424 dann geschlossen, bspw. vernäht wird. Der Innenreifen 424 und der Schlauch 430 bilden somit einen sogenannten Schlauchreifen. Das Einlageteil 440 weist bei der dargestellten Ausführungsform lediglich auf der in Figur 51 linken Seite Rippen 442 auf, die Luftkanäle zwischen einem Zweiwegeventil 450 und einer Durchgangsöffnung 452 in dem Innenreifen 424 bilden. Die Durchgangsöffnung 452 ist in einem Bereich des Innenreifens 424 angeordnet, in dem dessen Textillagen überlappen, oder die Durchgangsöffnung ist mit einer Verstärkung versehen.

Je nach Stellung des Zweiwegeventils 450 wird entweder der Schlauch 430 befüllt oder die Luft gelangt über die durch die Rippen 442 des Einlageteils 440 gebildeten Luftkanäle zwischen dem Innenreifen 424 und dem Schlauch 430 hindurch zu der Durchgangsöffnung 452 und von dort in den Zwischenraum zwischen der Felge 422 und dem Fahrreifen 412.

Der Vorteil der Reifenanordnung 400 ist, dass kaum Montagefehler auftreten können, da das Einlageteil 440, der Innenreifen 424 und der Schlauch 430 eine Einheit bilden, die insgesamt auf der Felge 422 montiert wird.

Die schematische Darstellung der Figur 52 zeigt eine weitere erfindungsgemäße Reifenanordnung 500. Die Reifenanordnung 500 ist sehr ähnlich zu der Reifenanordnung 300 der Figur 50 aufgebaut, so dass lediglich die Unterschiede erläutert werden, funktionsgleiche oder identische Teile aber nicht erneut beschrieben werden.

Im Unterschied zur Reifenanordnung 300 der Figur 50 weist die Reifenanordnung 500 zwei getrennte Ventile auf. Dargestellt ist in Figur 52 lediglich ein Ventil 550, das in der Durchgangsbohrung eines Einlageteils 540 angeordnet ist. Das Einlageteil 540 ist zwischen dem Innenreifen 524 und der Felge 522 sowie auch zwischen den Innenreifen 524 und dem Fahrreifen 512 angeordnet. Das Einlageteil 540 bildet dadurch einen Luftkanal zwischen dem Innenreifen 524 und der Felge 522 sowie auch zwischen dem Innenreifen 524 und dem Fahrreifen 512, so dass mit dem Ventil 550 der Zwischenraum zwischen der Felge 522 und dem Fahrreifen 512 befüllt werden kann.

Der Innenreifen 524 und der Schlauch 530 bilden einen sogenannten Schlauchreifen, der mit einem weiteren, in Figur 52 nicht dargestellten Ventil versehen ist. Die Felge 522 weist somit zwei getrennte Ventilbohrungen auf, wobei das Ventil 550 sowie auch das weitere, nicht dargestellte Ventil zum Befüllen des Schlauchs 530 jeweils mit einem Dichtkonus versehen ist, um luftdicht in der Felge 522 angeordnet werden zu können.

## Patentansprüche

1. Reifenanordnung für eine Fahrradfelge (22) mit
einem Fahrreifen (12) mit einer Lauffläche (14) und zwei Reifenwülsten (16), die im montierten Zustand an der Innenseite der Felgenhörner (20) anliegen,
einem Innenreifen (24), der im montierten Zustand innerhalb des Fahrreifens (12) angeordnet ist,
einem Schlauch (30), der im montierten Zustand innerhalb des Innenreifens (24) angeordnet ist,
Ventilmitteln zum Befüllen einerseits des Schlauchs (30) und andererseits eines Zwischenraums zwischen der Felge (22) und dem Fahrreifen (12) mit unterschiedlichem Luftdruck,
wobei der Innenreifen (24) im befüllten und montierten Zustand wenigstens abschnittsweise an den Reifenwülsten (16) des Fahrreifens (12) anliegt und diese gegen die Felge (22) drückt,
**dadurch gekennzeichnet, dass** ein Einlageteil (40) vorgesehen ist, das im montierten Zustand einen Luftkanal von den Ventilmitteln zu dem Zwischenraum zwischen der Felge (22) und dem Fahrreifen (12) bildet, wobei das Einlageteil (40) zwischen dem Schlauch (30) und der Felge (22), zwischen dem Innenreifen (24) und der Felge (22), zwischen dem Schlauch (30) und dem Innenreifen (24) und/oder zwischen dem Innenreifen (24) und dem Fahrreifen (12) angeordnet ist, wobei das Einlageteil (40) klammerartig ausgebildet ist und den Schlauch (30) oder den Innenreifen abschnittsweise umgreift und wobei das Einlageteil (40) eine mittig angeordnete Durchgangsbohrung (42) zum Durchstecken eines Ventils (34) sowie wenigstens eine von der Durchgangsbohrung (42) ausgehende Rinne (41) aufweist.

2. Reifenanordnung nach Anspruch 1, **dadurch gekennzeichnet, dass** der Innenreifen (24) in seiner Wand mit einer ersten Durchgangsöffnung (48) versehen ist, wobei die erste Durchgangsöffnung (48) im montierten Zustand mit dem Zwischenraum zwischen der Felge (22) und dem Fahrreifen (12) in Verbindung steht und
wobei ein Einlageteil (40) vorgesehen ist, das im montierten Zustand zwischen der Felge (22) und dem Schlauch (30) sowie zwischen dem Schlauch (30) und dem Innenreifen (24) angeordnet ist und das wenigstens abschnittsweise einen Luftkanal zwischen der Felge (22) und dem Schlauch (30) sowie zwischen dem Schlauch (30) und dem Innenreifen (24) bis zur Durchgangsöffnung (48) im Innenreifen (24) bildet.

3. Reifenanordnung nach Anspruch 1 oder 2, **dadurch gekennzeichnet, dass** die Ventilmittel zwei getrennte Ventile (34, 50) aufweisen, wobei ein erstes Ventil (50) mit dem Innenraum des Schlauchs (30) in Verbindung steht und ein zweites Ventil (34) an dem Einlageteil (40) angeordnet ist und mit dem durch das Einlageteil (40) gebildeten Luftkanal in Verbindung steht.

4. Reifenanordnung nach Anspruch 3, **dadurch gekennzeichnet, dass** das erste und das zweite Ventil (34, 50) jeweils einen Dichtkonus (36, 52) aus elastischem Material aufweisen, der für einen Dichteingriff mit jeweils einer Ventilbohrung (32) in der Felge (22) ausgebildet ist.

5. Reifenanordnung nach wenigstens einem der vorstehenden Ansprüche, **dadurch gekennzeichnet, dass** das zweite Ventil (34) eine sich in Umfangsrichtung der Reifenanordnung erstreckende Fußplatte (44) aus elastischem Material aufweist, die wenigstens abschnittsweise zwischen dem Einlageteil (40) und dem Schlauch (30) angeordnet ist.

6. Reifenanordnung nach Anspruch 1 oder 2, **dadurch gekennzeichnet, dass** die Ventilmittel ein Zweiwegeventil aufweisen, wobei ein erster Auslass des Zweiwegeventils mit dem Innenraum des Schlauchs (30) in Verbindung steht und ein zweiter Auslass des Zweiwegeventils im montierten Zustand mit dem Luftkanal zwischen der Felge (22) und dem Schlauch (30) sowie zwischen dem Schlauch (30) und dem Innenreifen (24) bis zur Durchgangsöffnung (48) im Innenreifen (24) in Verbindung steht.

7. Reifenanordnung nach Anspruch 6, **dadurch gekennzeichnet, dass** das Zweiwegeventil an dem Einlageteil (40) angeordnet ist.

8. Reifenanordnung nach wenigstens einem der vorstehenden Ansprüche, **dadurch gekennzeichnet, dass** die Rinne (41) wenigstens einen Abschnitt des Luftkanals zwischen dem Schlauch (30) und dem Innenreifen (24) bis zur Durchgangsöffnung (48) im Innenreifen (24) bildet.

9. Reifenanordnung nach wenigstens einem der vorstehenden Ansprüche, **dadurch gekennzeichnet, dass** der Innenreifen (24) wenigstens abschnittsweise aus luftdurchlässigem Gewebe gebildet ist.

10. Reifenanordnung nach wenigstens einem der vorstehenden Ansprüche, **dadurch gekennzeichnet, dass** der Innenreifen (24) an seiner Außenseite und der Fahrreifen (12) an seiner Innenseite wenigstens teilweise freiliegende Karkassfäden aufweisen, so dass eine Anlagefläche zwischen Fahrreifen (12) und Innenreifen (24) nicht luftdicht abdichtet.

11. Reifenanordnung nach wenigstens einem der vorstehenden Ansprüche, **dadurch gekennzeichnet, dass** das Gewebe des Innenreifens (24) mit zwei umlaufenden Reifenwülsten (26) verbunden ist, insbesondere vernäht, vulkanisiert, verschweißt oder verklebt.

12. Reifenanordnung nach Anspruch 11, **dadurch gekennzeichnet, dass** die Reifenwülste (26) des Innenreifens (24) mit einem Wulstkern (28) mit sehr zugfesten und hochmodulen Fasern versehen ist, insbesondere Zylonfasern, Carbonfasern oder Aramidfasern.

13. Reifenanordnung nach wenigstens einem der vorstehenden Ansprüche, **dadurch gekennzeichnet, dass** der Innenreifen (24) eine Lage Kreuzgewebe und zwei Reifenwülste (26) aufweist, wobei Kanten des Gewebes zum Innenraum des Innenreifens hin oder nach außen um die Reifenwülste (26) umgeschlagen sind.

14. Reifenanordnung nach wenigstens einem der vorstehenden Ansprüche, **dadurch gekennzeichnet, dass** die Durchgangsbohrung (48) des Innenreifens (24) in einem Bereich (54, 55) angeordnet ist, in dem sich wenigstens zwei Gewebelagen des Innenreifens (24) überlappen.

15. Reifenanordnung nach wenigstens einem der vorstehenden Ansprüche, **dadurch gekennzeichnet, dass** Mittel zum Abdichten zwischen Ventil und Felge (22) und zum Abdichten von Speichenbohrungen in der Felge (22) vorgesehen sind.

## Claims

1. Tire assembly for a bicycle rim (22), comprising
a wheel tire (12) with a tread surface (14) and two tire beads (16) which in the mounted condition bear on the interior side of the rim edges (20),
an inner tire (24) which in the mounted condition is disposed within the wheel tire (12),
a tube (30) which in the mounted condition is disposed within the inner tire (24), valve means for filling with different air pressures, on the one hand side, the tube (30) and, on the other hand side, an intermediate space between the rim (22) and the wheel tire (12),
wherein the inner tire (24) in the filled and mounted condition bears on the tire beads (16) of the wheel tire (12) at least in sections and presses said beads against the rim (22),
**characterized in that**
an insert part (40) is provided which in the mounted condition forms an air duct from the valve means to the intermediate space between the rim (22) and the wheel tire (12), wherein the insert part (40) is disposed between the tube (30) and the rim (22), between the inner tire (24) and the rim (22), between the tube (30) and the inner tire (24), and/or between the inner tire (24) and the wheel tire (12), wherein the insert part (40) has a brace-type design and encompasses the tube (30) or the inner tire in sections, and wherein the insert part (40) has a central through hole (42) for passing through a valve (34) and at least one trench (41) extending from the through hole (42).

2. Tire assembly according to claim 1, **characterized in that** the inner tire (24) is provided with a first through opening (48) in its wall, wherein the first through opening (48) in the mounted condition is in communication with the intermediate space between the rim (22) and the wheel tire (12), and
wherein an insert part (40) is provided which in the mounted condition is disposed between the rim (22) and the tube (30), and between the tube (30) and the inner tire (24), and which at least in sections forms an air duct between the rim (22) and the tube (30), and between the tube (30) and the inner tire (24) up to the through opening (48) in the inner tire (24).

3. Tire assembly according to claim 1 or 2, **characterized in that** the valve means have two separate valves (34, 50), wherein a first valve (50) is in communication with the interior space of the tube (30) and a second valve (34) is arranged on the insert part (40) and is in communication with the air duct formed by the insert part (40).

4. Tire assembly according to claim 3, **characterized in that** the first and the second valve (34, 50) each have a sealing cone (36, 52) made of elastic material and which is configured for sealing engagement with a respective valve hole (32) in the rim (22).

5. Tire assembly according to at least one of the preceding claims, **characterized in that** the second valve (34) has a valve base plate (44) made of elastic material extending in the circumferential direction of the tire assembly and which is arranged between the insert part (40) and the tube (30) at least in sections.

6. Tire assembly according to claim 1 or 2, **characterized in that** the valve means include a two-way valve, wherein a first outlet of the two-way valve is in communication with the interior space of the tube (30) and a second outlet of the two-way valve, in the mounted condition, is in communication with the air duct between the rim (22) and the tube (30), and between the tube (30) and the inner tire (24) up to the through opening (48) in the inner tire (24).

7. Tire assembly according to claim 6, **characterized in that** the two-way valve is arranged on the insert part (40).

8. Tire assembly according to at least one of the preceding claims, **characterized in that** the trench (41) constitutes at least one section of the air duct between the tube (30) and the inner tire (24) up to the through opening (48) in the inner tire (24).

9. Tire assembly according to at least one of the preceding claims, **characterized in that** the inner tire (24) is made of air-permeable fabric at least in sections.

10. Tire assembly according to at least one of the preceding claims, **characterized in that** the inner tire (24) on its exterior side and the wheel tire (12) on its interior side have at least partially exposed carcass filaments such that there is no air-tight sealing of a contact surface between wheel tire (12) and inner tire (24).

11. Tire assembly according to at least one of the preceding claims, **characterized in that** the fabric of the inner tire (24) is connected to two circumferential tire beads (26), in particular is sewn, vulcanized, welded, or adhesively bonded.

12. Tire assembly according to claim 11, **characterized in that** the tire beads (26) of the inner tire (24) are provided with a bead core (28) including very high tensile strength and high-modulus fibers, in particular Zylon fibers, carbon fibers, or aramid fibers.

13. Tire assembly according to at least one of the preceding claims, **characterized in that** the inner tire (24) includes a ply of canvas fabric and two tire beads (26), wherein edges of the fabric are folded towards the interior space of the inner tire or outwards around the tire beads (26).

14. Tire assembly according to at least one of the preceding claims, **characterized in that** the through hole (48) of the inner tire (24) is arranged in a region (54, 55), wherein at least two fabric plies of the inner tire (24) overlap.

15. Tire assembly according to at least one of the preceding claims, **characterized in that** means for sealing between valve and rim (22) and for sealing of spoke holes in the rim (22) are provided.

## Revendications

1. Système de pneu pour une jante de bicyclette (22), comprenant
un pneu de roulement (12) avec une surface de roulement (14) et deux talons de pneus (16) qui, dans l'état monté, s'appliquent contre le côté intérieur du rebord de jante (20),
un pneu intérieur (24), qui dans l'état monté, est disposé à l'intérieur du pneu de roulement (12),
une chambre à air (30) qui, dans l'état montée, est disposée à l'intérieur du pneu intérieur (24),
des moyens de valve pour gonfler d'une part la chambre à air (30) et d'autre part un espace intermédiaire entre la jante (22) et le pneu de roulement (12) avec une pression d'air différente,
le pneu intérieur (24), dans l'état gonflé et monté, s'appliquant au moins en partie contre les talons de pneus (16) du pneu de roulement (12) et les pressant contre la jante (22),
**caractérisé en ce qu'**il est prévu une pièce d'insertion (40) qui, dans l'état monté, forme un canal d'air depuis les moyens de valve jusqu'à l'espace intermédiaire entre la jante (22) et le pneu de roulement (12), la pièce d'insertion (40) étant disposée entre la chambre à air (30) et la jante (22), entre le pneu intérieur (24) et la jante (22), entre la chambre à air (30) et le pneu intérieur (24) et/ou entre le pneu intérieur (24) et le pneu de roulement (12), la pièce d'insertion (40) étant réalisée en forme de pince et venant en prise en partie autour de la chambre à air (30) ou du pneu intérieur et la pièce d'insertion (40) présentant un alésage traversant (42) disposé centralement pour y enfoncer une valve (34) ainsi qu'au moins une rainure (41) partant de l'alésage traversant (42).

2. Système de pneu selon la revendication 1, **caractérisé en ce que** le pneu intérieur (24) est pourvu, dans sa paroi, d'une première ouverture traversante (48), la première ouverture traversante (48), dans l'état monté, étant en liaison avec l'espace intermédiaire entre la jante (22) et le pneu de roulement (12) et
une pièce d'insertion (40) étant prévue, laquelle, dans l'état monté, est disposée entre la jante (22) et la chambre à air (30) et entre la chambre à air (30) et le pneu intérieur (24) et forme au moins en partie un canal d'air entre la jante (22) et la chambre à air (30) ainsi qu'entre la chambre à air (30) et le pneu intérieur (24) jusqu'à l'ouverture traversante (48) dans le pneu intérieur (24).

3. Système de pneu selon la revendication 1 ou 2, **caractérisé en ce que** les moyens de valve présentent deux valves séparées (34, 50), une première valve (50) étant en liaison avec l'espace intérieur de la chambre à air (30) et une deuxième valve (34) étant disposée au niveau de la pièce d'insertion (40) et étant en liaison avec le canal d'air formé par la pièce d'insertion (40).

4. Système de pneu selon la revendication 3, **caractérisé en ce que** la première et la deuxième valve (34, 50) présentent à chaque fois un cône d'étanchéité (36, 52) en matériau élastique qui est réalisé en vue d'un engagement étanche avec un alésage de valve respectif (32) dans la jante (22).

5. Système de pneu selon au moins l'une quelconque des revendications précédentes, **caractérisé en ce que** la deuxième valve (34) présente une plaque de base (44) en matériau élastique s'étendant dans la direction périphérique du système de pneu, laquelle est disposée au moins en partie entre la pièce d'insertion (40) et la chambre à air (30).

6. Système de pneu selon la revendication 1 ou 2, **caractérisé en ce que** les moyens de valve présentent une valve à deux voies, une première sortie de la valve à deux voies étant en liaison avec l'espace intérieur de la chambre à air (30) et une deuxième sortie de la valve à deux voies, dans l'état monté, étant en liaison avec le canal d'air entre la jante (22) et la chambre à air (30) et entre la chambre à air (30) et le pneu intérieur (24) jusqu'à l'ouverture traversante (48) dans le pneu intérieur (24).

7. Système de pneu selon la revendication 6, **caractérisé en ce que** la valve à deux voies est disposée au niveau de la pièce d'insertion (40).

8. Système de pneu selon au moins l'une quelconque des revendications précédentes, **caractérisé en ce que** la rainure (41) forme au moins une portion du canal d'air entre la chambre à air (30) et le pneu intérieur (24) jusqu'à l'ouverture traversante (48) dans le pneu intérieur (24).

9. Système de pneu selon au moins l'une quelconque des revendications précédentes, **caractérisé en ce que** le pneu intérieur (24) est formé au moins en partie d'un tissu perméable à l'air.

10. Système de pneu selon au moins l'une quelconque des revendications précédentes, **caractérisé en ce que** le pneu intérieur (24), au niveau de son côté extérieur, et le pneu de roulement (12), au niveau de son côté intérieur, présentent des fils de carcasse au moins en partie exposés de sorte qu'une surface d'appui entre le pneu de roulement (12) et le pneu intérieur (24) ne soit pas étanche à l'air.

11. Système de pneu selon au moins l'une quelconque des revendications précédentes, **caractérisé en ce que** le tissu du pneu intérieur (24) est relié à deux talons de pneu périphériques (26), notamment par couture, vulcanisation, soudage ou collage.

12. Système de pneu selon la revendication 11, **caractérisé en ce que** les talons de pneu (26) du pneu intérieur (24) sont pourvus d'une tringle (28) avec des fibres de grande résistance à la traction et de module élevé, en particulier des fibres de Zylon, des fibres de carbone ou des fibres d'aramide.

13. Système de pneu selon au moins l'une quelconque des revendications précédentes, **caractérisé en ce que** le pneu intérieur (24) présente une couche de tissu croisé et deux talons de pneu (26), des bords du tissu étant repliés vers l'espace intérieur du pneu intérieur ou vers l'extérieur autour des talons de pneu (26).

14. Système de pneu selon au moins l'une quelconque des revendications précédentes, **caractérisé en ce que** l'alésage traversant (48) du pneu intérieur (24) est disposé dans une région (54, 55) dans laquelle au moins deux couches de tissu du pneu intérieur (24) se chevauchent.

15. Système de pneu selon au moins l'une quelconque des revendications précédentes, **caractérisé en ce que** des moyens sont prévus pour réaliser l'étanchéité entre la valve et la jante (22) et pour réaliser l'étanchéité d'alésages de rayons dans la jante (22).
